# EUROPÄISCHE PATENTSCHRIFT

(11) **EP 2 892 715 B1**
(45) Veröffentlichungstag und Bekanntmachung des Hinweises auf die Patenterteilung: **08.11.2017**
(21) Anmeldenummer: 13758754.9
(22) Anmeldetag: 03.09.2013
(51) Int. Cl.: B30B 11/28, B30B 15/30

(54) **VORRICHTUNG ZUM KOMPAKTIEREN VON FASERIGEM PFLANZENGUT, INSBESONDERE ZUM KOMPAKTIEREN VON HALMGUT**
APPARATUS FOR COMPACTING FIBROUS PLANT MATERIAL, ESPECIALLY FOR COMPACTING STALK MATERIAL
DISPOSITIF POUR COMPACTER DES PRODUITS VÉGÉTAUX FIBREUX, EN PARTICULIER POUR COMPACTER DES TIGES VÉGÉTALES

(30) Priorität: 05.09.2012 DE 102012017549
(43) Veröffentlichungstag der Anmeldung: 15.07.2015
(73) Patentinhaber: KALVERKAMP, Klemens, 49401 Damme (DE); Kalverkamp, Felix, 49401 Damme (DE)
(72) Erfinder: KALVERKAMP, Klemens, 49401 Damme (DE); Kalverkamp, Felix, 49401 Damme (DE)
(74) Vertreter: Möller, Friedrich
(86) Internationale Anmeldenummer: PCT/EP2013/002638
(87) Internationale Veröffentlichungsnummer: WO 2014/037099

(56) Entgegenhaltungen:
- CH-A- 444 460
- DE-A1- 4 116 476
- DE-B- 1 101 374
- DE-U1- 29 606 641
- DE-U1-202009 001 697
- FR-A1- 2 274 438
- FR-A1- 2 931 721
- GB-A- 356 388
- GB-A- 416 539
- US-A- 1 127 925
- US-A- 2 052 449
- US-A- 2 365 658
- US-A- 3 249 069
- US-A- 3 365 749
- US-A- 3 452 393
- US-A- 3 782 273

## Beschreibung

Die Erfindung bezieht sich auf eine Vorrichtung zum Kompaktieren von faserigem Pflanzengut, insbesondere zum Kompaktieren von Halmgut, gemäß dem Oberbegriff des Anspruchs 1.

Die Verwertung nachwachsender Rohstoffe, wie faseriges Pflanzengut, gewinnt zunehmend an Bedeutung. So können nachwachsende Rohstoffe, wie Holz, aber auch geerntetes Halmgutmaterial, wie beispielsweise Stroh, weiterverwendet werden, beispielsweise zu Einstreu- oder Verbrennungszwecken. Dabei erweist es sich als sehr vorteilhaft, solche Rohstoffmaterialien zu pelletieren und zu Pellets zu kompaktieren.

Die US 3 452 393 A offenbart eine Vorrichtung zur Herstellung von Pellets mit zwei gegensinnig antreibbaren Presstrommeln. Die Presstrommeln verfügen über abwechselnd aufeinanderfolgende Druckringe und Aufnahmenuten. Die Presswalzen kämmen derart miteinander, dass es zu einem bereichsweisen Eingriff jedes Druckrings einer Presswalze in eine Aufnahmenut der anderen Presswalze kommt. Die Druckringe verfügen über eine glatte, zylindrische Mantelfläche und auf die Mantelfläche verteilte Stifte. Diese Stifte dienen zum Einziehen des zu pelletierenden Materials in einen Einzugtrichter zwischen den Presswalzen. Die Stifte tragen aber nicht zum Kompaktieren des zu pelletierenden Materials bei.

Zwei gegensinnig antreibbare und miteinander kämmende Presswalzen zum Granulieren von Substanzen sind aus der DE 11 01 374 B und der GB 416 539 A bekannt. Die Presswalzen dieser Vorrichtungen verfügen über in Aufnahmenuten eingreifende Druckringe mit glatten, zylindrischen Mantelflächen, wobei die Druckringe der erstgenannten Schrift über einen in Umfangsrichtung gewellten Verlauf verfügen. Die glatten, zylindrischen Außenflächen der Druckringe erschweren das Einziehen der zu verpressenden Substanzen in dem Bereich des Einzugtrichters zwischen den Presstrommeln. Daraus resultiert eine beträchtliche Verstopfungsgefahr dieser genannten Vorrichtungen.

Aus der DE 20 2009 001 697 U1 ist eine Vorrichtung zum Pressen von Pellets bekannt, die ein Paar von einer Zuführeinrichtung nachgeordneten Presstrommeln aufweist, die gegensinnig rotieren. Eine Presstrommel hat zu einem inneren Hohlraum hin offene Presskanäle, die in ihrem oberen, dem Umfang der Presstrommel zugewandten Bereich jeweils einen Aufnahmenutenraum aufweisen. Dieser Aufnahmenutenraum ist von Wandungen begrenzt, die jeweils quer zur Umlaufrichtung der Presstrommeln ausgerichtete Wandstege umfassen. Der die Presskanäle aufweisenden Presstrommel ist die andere Presstrommel zugeordnet, die Druckringe mit zylinderförmigen Pressstempeln aufweist. Beim Rotieren der Presstrommeln dringt ein jeweiliger Pressstempel beim Durchlaufen bzw. Passieren der Verbindungsebene, in der die Drehachsen der Presstrommeln liegen, in den zugeordneten Presskanal ein, um das zu pelletierende Material in den Presskanal zu stopfen und zu Pellets zu formen. Bei dieser Anordnung ist es jedoch so, dass die quer zur Umlaufrichtung ausgerichteten Wandstege der Wandungen des Presskanals unter Einschluss der den Nutenaufnahmeraum begrenzenden Wandbereiche ein Abstandsmaß zur Umfangsfläche des Druckringes aufweisen, von der die Pressstempel ausgehen. Die Folge ist, dass die Stirnseiten der quer zur Umlaufrichtung ausgerichteten Wandstege der Aufnahmenuten ihrerseits als Presseinrichtungen wirken und dort befindliches Material an der Umfangsfläche des Druckringes verdichten, sodass dieses nicht in die Presskanäle gelangen kann. Dies führt im rauen Alltagsbetrieb dazu, dass die Räume zwischen den Pressstempeln der Druckringe zugestopft werden, was nicht nur zu einer erhöhten Blindleistung der Vorrichtung führt, sondern auch dazu, dass Stillstandzeiten aufgrund einer Verstopfung der Vorrichtung zu befürchten sind. Solche Verstopfungen lassen sich nur durch sehr zeitaufwändige und kraftraubende Reinigungsarbeiten beseitigen.

Die US 3 249 069 A offenbart eine von einem Zugfahrzeug zu ziehende Vorrichtung zur Pelletierung von Materialien, die ebenfalls zwei gegensinnig antreibbare Presstrommeln aufweist. Zum Aufsammeln des zu pelletierenden Materials vom Boden sind eine Aufnahmevorrichtung vorgesehen sowie mehrere drehbare Zinkenwalzen, welche das zu pelletierende Material in Richtung einer Zuführeinrichtung fördern. Die Zuführfördereinrichtung besteht aus einer konisch ausgeführten, um eine gegenüber den Presstrommeln schräg gestellte Achse antreibbaren Trommel sowie einer weiteren Trommel, welche koaxial zu einer ersten Presstrommel angeordnet und fest mit dieser verbunden ist. Diese weitere Trommel läuft in einer inneren Ausnehmung der schräg angeordneten konischen Trommel. Das zu pelletierende Material wird somit über die koaxial angeordnete Trommel und eine stirnseitige Fläche der konischen Trommel quer zur Fahrtrichtung der Vorrichtung in Richtung eines Einfüllbereiches zwischen den Presstrommeln bewegt und hierbei in geringem Maße verdichtet. Nachteilig bei dieser Vorrichtung ist, dass aufgrund eines fehlenden oder mangelnden Gegendruckes keine wirkungsvolle Verdichtung erfolgen kann. Wegen der seitlichen Zuführung des Pressgutes können lediglich sehr schmale Presstrommeln für die Herstellung von Pellets verwendet werden. Damit ist nur ein geringer Durchsatz erreichbar.

Aus der US 2 052 449 A ist eine Vorrichtung für die kontinuierliche Herstellung von Pellets aus schmelzfähigen Ausgangsmaterialien bekannt, die für einen nachfolgenden Verbrauch von z.B. Tieren oder Menschen geeignet sein sollen. Dazu sind Walzen mit jeweils einem inneren Aufnahmeraum vorgesehen, in den über Presskanäle, die in Längsrichtung der Walzen jeweils mit Abstand zueinander angeordnet sind, Material zugeführt werden kann. Zwischen den Presskanälen sind Vorsprünge als Druckringe, auch wiederum jeweils mit Abstand zueinander angeordnet, die in obere Aufnahmeräume der gegenüberliegenden Walze eingreifen, von denen die Presskanäle ausgehen. Die oberen Enden der plan ausgebildeten Vorsprünge tauchen in die Aufnahmeräume jedoch nur so weit ein, dass ein hinreichender Spalt zwischen der Einmündung des jeweiligen Presskanales in seinen oberen Aufnahmeraum verbleibt, um das zu verdichtende Material dort schmelzen lassen zu können. Die Erstellung dieser Schmelze ist für die Funktionstauglichkeit dieser Maschine zwingend, sodass diese wenig geeignet ist, faseriges Halmgut zu verarbeiten. Für ein Schmelzen der Ausgangsmaterialien vor den jeweiligen Presskanälen ist eine enorme Energie bereitzustellen.

Aus der US 2010/0040721 A1 ist eine Rollenpresse zur Brikettierung von Biomasse bekannt. Diese Presse verfügt über zwei gegensinnig antreibbare Walzen, die an ihrem Außenumfang Druckringe mit dazwischenliegenden Nuten aufweisen. Die Druckringe der einen Walze greifen in die Nuten der anderen Walze ein. Verteilt auf den äußeren Umfang der Druckringe sind Vertiefungen vorgesehen, die zusammen mit dem Nutengrund der Nuten Formhohlräume für die herzustellenden Briketts bilden. Die Pressung der Briketts in Vertiefungen der Druckringe ist bei der bekannten Rollenpresse begrenzt.

Es ist Aufgabe der vorliegenden Erfindung, eine Vorrichtung zum Kompaktieren von faserigem Pflanzengut, insbesondere Halmgut, zu schaffen, die eine wirtschaftlich optimierte Herstellung von Pellets ermöglicht, die eine möglichst hohe Vorverdichtung realisieren kann, eine möglichst vollständige Ausnutzung des Halmguts gewährleistet und bei der die Gefahr der Verstopfung vermindert ist.

Gelöst wird die Aufgabe durch die Merkmale des Anspruchs 1. Damit ist eine Vorrichtung zur Pelletierung von Materialien geschaffen, bei der für das zu pelletierende Pflanzen- bzw. Halmgut während des Umlaufens der Presstrommeln und des Eingreifens des Druckringes in die jeweilige Aufnahmenute kein Raum mehr zur Verfügung steht, in dem sich zu verarbeitendes Material festsetzen kann und dadurch nicht mehr in den Presskanal gelangt.

Dadurch, dass in dem Bereich während des Umlaufens der Presstrommeln, in dem der jeweilige Bereich des Druckringes für die maximale Verdichtung des Materials zwecks Überführung des Materials in den Presskanal zu sorgen hat, d.h. in dem Bereich, in dem der Druckring und die Aufnahmenut der beiden Presstrommeln die Verbindungsebene zwischen den Drehachsen der Presstrommeln durchlaufen bzw. passieren, also der Verbindungsebene, in der die beiden Drehachsen der beiden Presstrommeln gelegen sind, sorgen jeweilige Druckringe im Zusammenspiel mit dem quer in zur Umlaufrichtung ausgerichteteten Wandsteg dafür, dass - in Umlaufrichtung betrachtet - der aus den Aufnahmenuten und dem Druckring gebildete Hochverdichtungsbereich in Umlaufrichtung durch den Wandsteg und durch den Druckring nach vorne hin ganz oder annähernd geschlossen wird. Dann ist dieser Bereich maßgeblich nur noch zum Presskanal hin offen, da er auch seitlich durch Druckringe so begrenzt ist, dass sämtliche in diesem Raum befindlichen Materialien, beispielsweise auch langfaseriges Halmgut, verdichtet und sicher in den Presskanal überführt werden können. Annähernd geschlossen meint in diesem Zusammenhang, dass aufgrund von Fertigungstoleranzen und unvermeidbaren Verschleißerscheinungen einer solchen Vorrichtung ein vollständiges Schließen nicht ganz zu erreichen ist.

Es ist bevorzugt vorgesehen, die beiden Presstrommeln in synchrone gegensinnige Umlaufbewegungen zu versetzen. Dadurch können beide Presstrommeln mit gleicher Drehzahl gegensinnig umlaufend angetrieben werden. Ein solcher Antrieb ist einfach realisierbar.

Die Vorrichtung ist bevorzugt so gestaltet, dass beide Presstrommeln gleich ausgebildet sind. Insbesondere sind beide Presstrommeln gleich ausgebildet und vorzugsweise auch gleich bemessen, indem sie über gleiche Abmessungen und eine gleiche Anzahl aufeinanderfolgender Druckringe und Aufnahmenuten verfügen. Außen liegt an einem Rand ein Druckring und am gegenüberliegenden Rand eine Aufnahmenut. Durch verdrehte Zuordnung der einen Presstrommel zur anderen Presstrommel wird trotz gleicher Presstrommeln das Eingreifen aller Druckringe und Aufnahmenuten der einen Presstrommel in die Aufnahmenuten und Druckringe der anderen Presstrommel erreicht. Dabei greifen bei gleicher Breite beider Presstrommeln der außenliegende Druckring der einen Presstrommel in die außenliegende Aufnahmenut der anderen Presstrommel - und umgekehrt - ein.

Der in Umlaufrichtung hintere quer zur Umlaufrichtung angeordnete Wandsteg, der den Aufnahmenutenraum und den in Betracht zu ziehenden Presskanal nach hinten (bezogen auf die Umlaufrichtung der Presstrommeln) begrenzt, weist zu der zugeordneten Wandung des Hochverdichtungsbereiches nur ein geringes Abstandsmaß auf. Hervorgerufen durch die 360° Umfangsfläche der Presstrommeln wird bei diesem Abstandsmaß der Hochverdichtungsbereich auch schon annähernd geschlossen. Dieser hintere quer zur Umlaufrichtung angeordnete Wandsteg ist dann - bezogen auf das nächste zum Einsatz kommende Teilungsmaß der Presskanäle - der zeitlich nächste Wandungssteg, der den Hochverdichtungsbereich zusammen mit dem Druckring der anderen Presstrommel in Umlaufrichtung nach vorne hin begrenzt, was sich während des 360° Umlaufes fortlaufend durch die jeweiligen Presskanäle der Aufnahmenutenräume einstellt. Damit ist eine optimale Verdichtung des zu pressenden Materials ermöglicht, ohne dass die Gefahr von Verstopfungen vorliegt. Ebenfalls sind Blindleistungen auf ein Mindestmaß reduziert.

Die Wandungen des Hochverdichtungsbereiches können so gestaltet sein, dass diese jeweils ein durch beabstandete Vorsprünge gebildetes Profil umfassen und beispielsweise ein zwischen zwei Vorsprüngen, vorzugsweise Zähnen, im Querschnitt geradlinig ausgebildeter oder im Querschnitt gewölbt ausgebildeter Zwischenbereich bzw. eine Vertiefung vorhanden ist, der jeweils Wölbungskomponenten bzw. Steigungen an den Vorsprüngen mit vorstehenden Stellen oder Zähnen mit Zahnspitzen hat, die jeweils eine Verdichtungsrichtung bzw. Verdichtungsrichtungskomponente hin zu einem mittleren, dem Presskanal zugeordneten Förderbereich erzeugen.

Es ist aber ebenfalls möglich, diesen Raum insgesamt gewölbt auszubilden mit einem mittleren Zahn, der nach Art eines Dornes ausgebildet ist, wobei die quer zur Umlaufrichtung ausgerichteten Wandstege der Presskanäle jeweils in den gewölbt ausgerichteten Raum des Druckringes derart eintauchen, dass beim Passieren der erwähnten Verbindungsebene der in Umlaufrichtung vordere Wandsteg des in Betracht zu ziehenden Presskanales sich auf die Wandung des gewölbten Raum des Druckringes zubewegt und somit den Hochverdichtungsbereich in Umlaufrichtung zumindest annähernd schließt, sodass wiederum eine optimale Vorverdichtung stattfindet mit der Pressrichtung hin zum Presskanal, ohne dass irgendwelche Angriffsflächen für zu verarbeitendes Material entstanden sind, an denen sich Material festsetzen kann, ohne in den Presskanal zu gelangen.

Vorteilhaft an dieser neuen Vorrichtung ist, dass nahezu sämtliches Pflanzen-oder Halmgut aus dem Pressbereich, also in demjenigen Bereich, in welchen die Druckringe in die Aufnahmenuten eingreifen bzw. eintauchen, in die Presskanäle gedrückt wird. Sofern an den Druckringen befindliche Vorsprünge oder Zahnspitzen den Aufnahmeöffnungen der Presskanäle gegenüberliegen, kann nicht in den Aufnahmekanal gedrücktes Halmgut in die Lücken zwischen benachbarten Vorsprüngen oder in Zahnlücken ausweichen, um hierin verpresst zu werden und somit eine etwaige Blindleistung der Pelletiervorrichtung reduziert ist, da in diesem Fall eine Verbindung zwischen den Presskanälen und den Lücken bzw. Zahnlücken vorhanden ist, welche einen Druckabbau gewährleistet.

In einer bevorzugten Ausführungsform befinden sich die höchsten Stellen bzw. Scheitel der Vorsprünge oder Zahnspitzen der Zähne gegenüberliegend zu den Stegen zwischen den Presskanälen, wodurch es nicht möglich ist, dass an Stellen oberhalb der Stege Material gelangen kann, welches bei einem Weiterdrehen der Presstrommeln aus dem Pressbereich herausbefördert werden würde und nicht mehr in die Presskanäle gelangen kann. Somit ist die Blindleistung der Pressvorrichtung zum Pressen von Pellets erheblich gesenkt, sodass die Verluste, also das dem Pressbereich zugeführte Pflanzen- oder Halmgut, welches nicht in die Presskanäle gelangt, erheblich verringert sind.

In einer bevorzugten Ausführungsform weisen die Vorsprünge oder Zahnspitzen eine nach außen gerichtete bogenförmige Kontur und der Nutengrund der Aufnahmenuten eine hieran angepasste korrespondierende Kontur auf. Diese Ausführung des sich über den Presskanälen in der Aufnahmenut befindlichen und im Zusammenwirken mit den Vorsprüngen oder Zähnen gebildeten Pressraumes gewährleistet eine optimierte und gleichmäßigere Verpressung des Pflanzen- oder Halmgutes in den Presskanälen.

Innerhalb einer Lücke oder Zahnlücke zwischen zwei Vorsprüngen oder Zahnspitzen kann jeweils ein radial nach außen weisender Dorn in vorteilhafter Weise vorgesehen werden. Der Dorn dient dazu, gegebenenfalls in den Mündungsbereich des Presskanals gelangende Steine oder ähnliche Fremdkörper zu zertrümmern und zu zerkleinern, sodass es zu keiner Verstopfung der Presskanäle kommen kann.

Alle Druckringe sind von zwei gegenüberliegenden Ringwandungen begrenzt. Die Ringwandungen der Druckringe liegen in parallelen Ebenen, die die Drehachsen der Presswalzen senkrecht bzw. rechtwinklig schneiden. Die Ebenen der Ringwandungen aller Druckringe beider Presstrommeln verlaufen parallel zueinander, wobei alle Ebenen und die daraufliegenden Ringwandungen gleiche Abstände aufweisen. Dadurch sind die Abstände gegenüberliegender Ringwandungen jedes Druckrings und die Abstände der Ringwandungen benachbarter Druckringe gleich und sowohl alle Druckringe als auch Aufnahmenuten etwa gleich breit. So können alle Druckringe in die ihnen zugeordneten Aufnahmenuten eingreifen, wobei die Ringwandungen im Pressbereich der Presstrommeln einander überlappen und dicht beieinanderliegen.

Die seitlichen Ringwandungen der Druckringe weisen an ihren Übergängen bzw. Kanten zum Außenumfang bzw. zur Umfangswandung der Druckringe umlaufende Schneidkanten auf. Infolge der Anpassung der Breite der Druckringe an die Breiten der Aufnahmenuten führen die äußeren, umlaufenden Schneidkanten der Druckringe zu einem Schneiden des Pflanzen- oder Halmguts, wenn im Pressbereich die Druckringe in die Aufnahmenuten eintreten und dabei eine bereichsweise Überlappung der Ringwandungen zustande kommt. Dieser Schneidvorgang erhöht die Wirksamkeit und Betriebssicherheit der Vorrichtung deutlich.

Infolge des Eintritts der Druckringe in die Aufnahmenuten und der abschnittsweisen Überlappung der Ringwandungen im Pressbereich kommt es insbesondere beim synchronen Antrieb beider Presswalzen mit gleichen Drehzahlen zu einer Relativbewegung der äußeren durch Vorsprünge und dazwischenliegende Vertiefungen profilierten Umfangsfläche der Druckringe zu den Nutengründen der Aufnahmenuten, weil trotz der gleich ausgebildeten Presstrommeln der Durchmesser der Umfangsfläche der Druckringe größer ist als der Durchmesser der Nutengründe der Aufnahmenuten. Die Folge ist ein Schlupf zwischen den Druckringen und den Aufnahmenuten im Pressbereich, der zu einem wirksamen Fördern, insbesondere Hineinstopfen, des Pflanzen- und Halmguts in die Presskanäle bzw. die davor vorgesehenen trichterartigen Einführbereiche führt.

Es ist weiter vorgesehen, den Außenumfang der Druckringe zu profilieren durch abwechselnd aufeinanderfolgende Vorsprünge und Vertiefungen. Die Vorsprünge und die zwischen zwei Vorsprüngen liegenden Vertiefungen können beliebige Verläufe aufweisen. Bevorzugt sind die Vorsprünge als Zähne ausgebildet und die Zahnlücken zwischen zwei beabstandeten Zähnen als Vertiefungen. Die Vertiefungen zwischen den Zahnlücken können bogenförmig, gerade oder auch kantig gestuft ausgebildet sein. Die Vertiefungen nehmen jeweils eine kleine Menge zu kompaktierenden Pflanzen- oder Halmguts auf und bringen es vor den jeweiligen Presskanal, wobei die jede Vertiefung beidseitig begrenzenden Zähne dafür sorgen, dass das Pflanzen- oder Halmgut von den Presstrommeln mit hohem Druck in und durch die Presskanäle gedrückt wird.

Ferner können für eine optimierte Verpressung des Pflanzen- oder Halmgutes in den Presskanälen innerhalb der Presstrommel Heiz- und/oder Kühlkanäle vorgesehen werden. Es hat sich gezeigt, dass die Verpressung abhängig von dem zu verpressenden Gut und seinem Zustand, z.B. seiner Feuchte, bei einer bestimmten Temperatur besonders günstig erfolgen kann, sodass eine Beheizung oder Kühlung der Presstrommeln vorteilhaft ist.

Für die Vorrichtung zur Pelletierung von Materialien wie faserigem Pflanzengut, insbesondere Halmgut, mit einer Zuführeinrichtung zum Zuführen von zu pressendem Gut ist es des Weiteren vorgesehen, dass die Zuführeinrichtung ein antreibbares Transportband umfasst, welches das zu verpressende Halmgut in den Bereich eines Einzugstrichters zwischen den Presstrommeln befördert und welches eine der beiden Presstrommeln zur Bildung eines Vorverdichtungsbereiches, der kanalartig ausgebildet sein kann, bereichsweise über einen Winkelbereich von zumindest 20° umschlingt. Der Vorverdichtungsbereich weist über seine Längserstreckung in Förderrichtung eine konstante Breite auf, welche in etwa der Breite mindestens einer der Presstrommel oder mindestens der Arbeitsbreite derselben entspricht.

Es kann sich der Abstand des Transportbandes zur Presstrommel in Förderrichtung verringern, insbesondere stetig verringern. Die genannte Ausbildung der Zuführeinrichtung ermöglicht eine besonders gleichmäßige Vorverdichtung des zu verpressenden Pflanzen- oder Halmgutes. Wenn der Vorverdichtungsbereich sich vorzugsweise stetig verengt, nähert sich das Transportband in Förderrichtung dem Umfang mindestens derjenigen Presstrommel an, die für eine wirkungsvolle Verdichtung mit einem gewissen minimalen Grad vom Transportband umschlungen ist. Die konstante Breite des Vorverdichtungsbereichs, welche in etwa der Breite der Presstrommeln oder minimal der Arbeitsbreite derselben entspricht, ermöglicht auch die Verarbeitung großer Mengen von Pflanzen- oder Halmgut innerhalb kürzester Zeit, sodass eine wirtschaftlichere Kompaktierung des Pflanzen- oder Halmgutes gegenüber dem Stand der Technik gegeben ist.

Mit der Zuführeinrichtung ist es möglich, auch langfaseriges Halmgut zu verarbeiten, ohne dass eine übermäßige oder überhaupt eine vorherige Vorzerkleinerung stattfinden muss. Somit kann das Halmgut unmittelbar vom Feld aufgenommen und verarbeitet werden.

Es hat sich als vorteilhaft erwiesen, wenn das Transportband die zumindest eine Presstrommel bevorzugt über einen Winkelbereich von 30° bis 120° umschlingt. Innerhalb dieses Umschlingungsbereiches ist eine genügende und optimal gleichmäßige, nicht zu schnell stattfindende Vorverdichtung gewährleistet.

Das Transportband kann als ein endlos ausgeführtes Gurt- oder Textilband ausgeführt sein, welches auf einer Anzahl von Rollen, die beidseits des Transportbandes angeordnet sein können und von denen zumindest eine antreibbar ist, geführt ist. Alternativ kann das Transportband auch über die Presstrommeln angetrieben werden, gegebenenfalls mittels eines Getriebes.

In einer bevorzugten Ausführung ist von den Rollen zumindest eine Rolle, vorteilhaft aber mehrere oder sämtliche Rollen, gleichzeitig in Bezug auf die Lage der Presstrommeln verstellbar. Damit kann die Zuführeinrichtung relativ zu den Presstrommeln verschoben oder auch verschwenkt werden, sodass die Ausbildung des Vorverdichtungsbereichs beeinflusst werden kann. Entsprechend dem zu verarbeitenden Halm- oder Pflanzengut kann der Vorverdichtungsbereich somit in gewissen Grenzen zum einen in der Länge verändert oder zum anderen der Abstand vom Transportband zu den Presstrommeln verändert werden. Hierdurch kann der Vorverdichtungsgrad beeinflusst werden.

Der Zuführeinrichtung vorgeordnet ist in vorteilhafter Weise eine Einzugsschnecke, welche das über eine Breite, welche größer als die Breite der Presstrommeln ist, aufgenommene Material in Querrichtung zusammenführt. Dadurch wird gewährleistet, dass der Zuführeinrichtung stets genügend Material für eine wirtschaftliche Herstellung des zu pelettierenden Materials zur Verfügung steht. Auch können so große Mengen von Material innerhalb kürzester Zeit verarbeitet werden.

Die Zuführeinrichtung steht in Zuführrichtung des Pflanzen- oder Halmguts zu den Presstrommeln gesehen gegenüber der Vorderseite der vordersten Presstrommel in Richtung zur Aufnahmevorrichtung vor. Das Obertrum des Transportbands der Zuführeinrichtung beginnt dadurch vor der vordersten Stelle der vornliegenden Presstrommel. So kann überschüssiges Pflanzen- bzw. Halmgut, das nach dem Durchlaufen des Pressbereichs auf den Presstrommeln zurück bleibt, vom Außenumfang der vorderen Presstrommel auf das Obertrum der Zuführeinrichtung zurücktransportiert und erneut dem Pressbereich zwischen den Presstrommeln wieder zugeführt werden.

Eine weitere vorteilhafte Ausführung weist einen der Einzugsschnecke vorgeordneten Selektierer oder Steinbrecher auf, sodass Steine oder andere mit aufgenommene Fremdkörper entweder aussortiert werden oder genügend zerkleinert werden.

In vorteilhafter Weise können zudem ein Sauggebläse und/oder eine Befeuchtungsvorrichtung vorgesehen sein. Mit dem Sauggebläse sind störender Staub oder nicht vollständig verpresste Feinanteile abführbar. Mit der Befeuchtungsvorrichtung kann entweder das Material in vorteilhafter Weise vorbehandelt werden oder eventuell auch der Pressstaub gebunden werden.

Die Erfindung umfasst eine Pelletiermaschine mit der erfindungsgemäßen Vorrichtung zum Pelletieren von Material, wobei die Pelletiermaschine entweder als von einem Zugfahrzeug ziehbar, als eine selbstfahrende Vorrichtung oder auch stationär ausgebildet sein kann.

Die Figuren der dargestellten Ausführungsbeispiele zeigen Folgendes:
- Fig. 1: eine Pelletiermaschine mit einem Zugfahrzeug in perspektivischer Ansicht,
- Fig. 2: die Pelletiermaschine aus Fig. 1 in einer teilweise aufgeschnittenen Seitenansicht,
- Fig. 3: die einzelnen Elemente der Pelletiermaschine mit der erfindungsgemäßen Pelletiervorrichtung in einer Seitenansicht einer ersten Ausführung,
- Fig. 4: zwei Presstrommeln mit im Hohlraum derselben angeordneten Förderschnecken in einer dreidimensionalen Ansicht,
- Fig. 5: eine Schnittansicht der Presstrommeln senkrecht zu ihren Drehachsen.
- Fig. 6: eine Draufsicht auf die Presstrommeln mit einer Getriebeanordnung und einem Lagerbock,
- Fig. 7: eine Schnittansicht durch eine Presstrommel entlang der Drehachse (Schnitt A-A aus Fig. 6),
- Fig. 8: eine Schnittansicht beider Presstrommeln durch die Drehachsen mit Darstellung der Förderschnecken,
- Fig. 9: eine Detailansicht des Pressbereichs im Schnitt entsprechend dem Ausschnitt X in Fig. 8,
- Fig. 10: eine Detailansicht des Pressbereichs im Schnitt entsprechend des Ausschnitts Y der Fig. 5,
- Fig. 11: die einzelnen Elemente der Pelletiermaschine mit der erfindungsgemäßen Pelletiervorrichtung in einer Seitenansicht in einer zweiten Ausführung,
- Fig. 12: die einzelnen Elemente der Pelletiermaschine mit der erfindungsgemäßen Pelletiervorrichtung in einer Seitenansicht in einer dritten erfindungsgemäßen Ausführung,
- Fig. 13: eine dreidimensionale Ansicht der Pelletiervorrichtung aus der Fig. 12,
- Fig. 14: die Pelletiermaschine mit der Darstellung eines Bunkers in einer Zwischenstellung,
- Fig. 15: die Pelletiermaschine mit der Darstellung des Bunkers in einer Ablage- oder Transportstellung,
- Fig. 16: eine zu Fig. 4 analoge Darstellung mit vergrößertem Teilbereich der Aufnahmenuten und der Druckringe sowie des inneren Hohlraumes und der Presskanäle,
- Fig. 17: ausschnittsweise eine perspektivische Darstellung auf einen Teil der Druckringe und der Aufnahmenuten in ihrer abwechselnden Anordnung auf der Umfangsfläche einer Presstrommel,
- Fig. 18: ausschnittsweise ein Ausführungsbeispiel eines Druckringes und einer Aufnahmenut in einer Ausführungsvariante, bei der der Wandungsbereich des Druckringes einwärts bogenförmig im Querschnitt ausgebildet ist und die Wandstege des Presskanals auf eine jeweilige Zahnspitze eines Zahnes der Wandung des Druckringes trifft,
- Fig. 19: eine zu Fig. 18 analoge Darstellung mit zwischen zwei Zähnen des Druckringes geradlinig ausgebildetem Wandungsbereich,
- Fig. 20: eine zu den Fig. 18 und 19 analoge Darstellung eines Ausführungsbeispiels eines Verdichtungsbereiches des Druckringes, bei der ein Wandungssteg in etwa mittig auf den gewölbten Wandungsbereich zwischen zwei Zähnen ausgerichtet ist und der Druckring einen Zahn hat, der in etwa mittig dornartig auf den Presskanal weist,
- Fig. 21: eine zu Fig. 20 analoge Darstellung mit einem geradlinig ausgebildeten Wandungsbereich zwischen zwei Zähnen des Druckrings.
- Fig. 22: eine zu den Fig. 18 bis 21 analoge Darstellung eines alternativen Ausführungsbeispiels, bei der der Außenumfang eines Druckringes mit einer engen (Zick-Zack-förmigen) Zahnprofilierung versehen ist, wobei in hellerer Darstellung der ansonsten verdeckte, eng-zahn-profilierte Bereich des der Aufnahmenut benachbart angeordeten Druckringes der einen Walze dargestellt ist, und
- Fig. 23: ausschnittsweise in perpektivischer Darstellung das Ausführungsbeispiel nach Fig. 22 mit Darstellung der Druckringe der einen Presstrommel, die in die Außennut der anderen Presstrommel eintauchen.

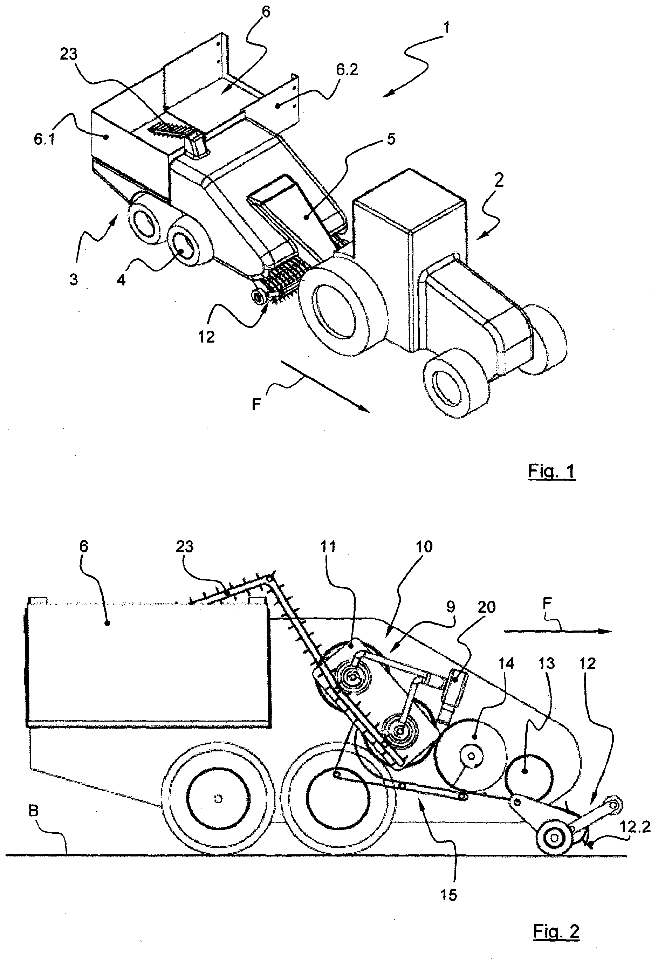

In der Fig. 1 ist eine Pelletiermaschine 1 gezeigt, welche von einem Zugfahrzeug 2 gezogen wird. Alternativ könnte die Pelletiermaschine 1 auch als selbstfahrende oder als stationäre Vorrichtung ausgebildet sein. Die Pelletiermaschine 1 verfügt über ein Fahrwerk 3 mit Rädern 4 sowie über eine Deichsel 5 zur Verbindung mit dem Zugfahrzeug 2. Ferner ist an der Pelletiermaschine 1 ein Bunker 6 vorgesehen, in welchem pelletiertes Halmgut gesammelt werden kann.

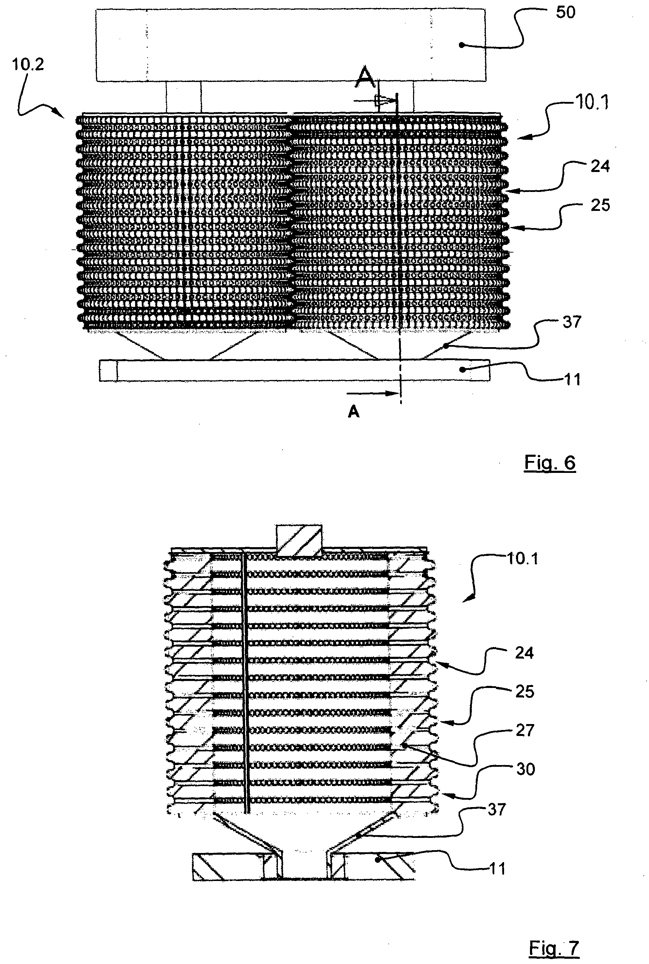

In der teilweise aufgeschnittenen Seitenansicht der Pelletiermaschine 1 in der Fig. 2 ist die grundsätzliche Anordnung einer ersten erfindungsgemäßen Ausführung mit einem Presstrommelpaar 9 zur Ausbildung der Pelletiervorrichtung 10 gezeigt, wobei das Presstrommelpaar 9 von zwei gegensinnig über ein Getriebe 50 (vergleiche Fig. 6) antreibbare Presstrommeln 10.1, 10.2 gebildet ist, welche an einem am Fahrwerk 3 angeordneten Lagerbock 11 drehbar gelagert sind. Der Pelletiervorrichtung 10 vorgeordnet ist eine Aufnahmevorrichtung 12, eine sogenannte Pick-Up, ein in Fahrtrichtung F hinter der Aufnahmevorrichtung 12 angeordneter Selektierer 13 sowie in Fahrtrichtung F dahinter eine Einzugsschnecke 14.

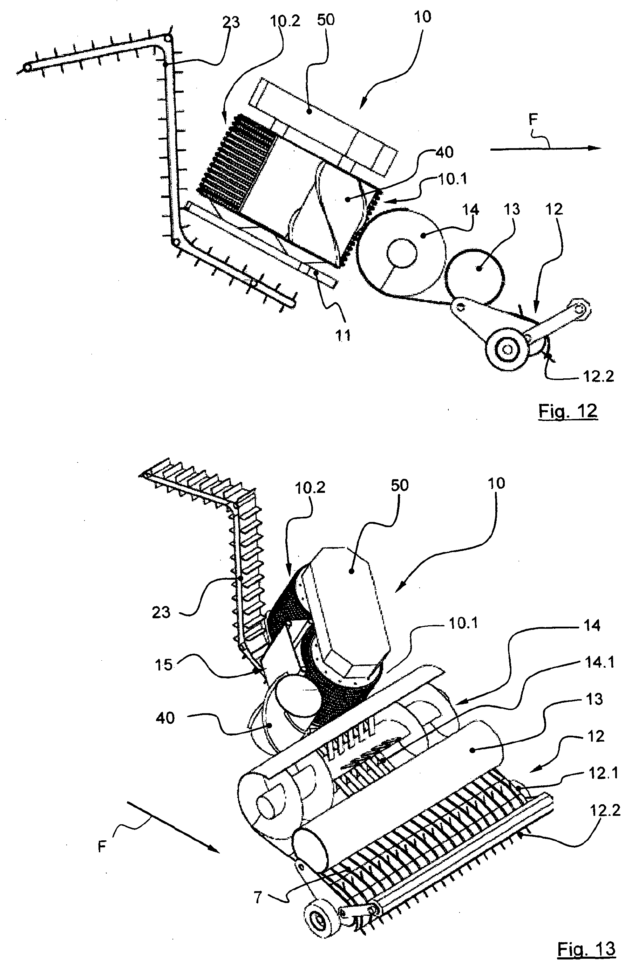

Die Aufnahmevorrichtung 12 kann beispielsweise als eine angetriebene Walze 12.1 mit auf dem Umfang verteilt angeordneten Zinken 12.2 zum Aufnehmen des Halmgutes, z.B. Stroh, ausgebildet sein. Hierzu bewegen sich die Zinken 12.2 in der Nähe des Bodens B entgegen in Fahrtrichtung F und befördern das Halmgut auf ein Gitter 7, welches deutlicher in Fig. 13 dargestellt ist. Das stetig nachgeförderte Halmgut schiebt dabei das Halmgut immer weiter in Richtung der Pelletiermaschine 1. Die Drehachse der Aufnahmevorrichtung 12, des Selektierers 13 und der Einzugsschnecke 14 ist jeweils parallel zum Boden B sowie quer zur Fahrtrichtung F ausgerichtet.

Der Selektierer 13 sortiert Fremdkörper wie Holz oder Steine aus dem Halmgut heraus, welche zu Störungen der Pelletiervorrichtung 10 führen würden, z.B. zu einem Verklemmen der Presstrommeln 10.1, 10.2. Die Breite der Aufnahmevorrichtung 12 und des Selektierers 13 ist größer als die Breite der Presstrommeln 10.1, 10.2, wie sich aus den nachfolgenden Figuren ergibt. Daher ist zwischen dem Selektierer 13 und der Pelletiervorrichtung eine Einzugsschnecke 14 vorgesehen, welche das Halmgut von den Seiten her in die Mitte der Pelletiermaschine 1 befördert. Mittig weist die Einzugsschnecke 14 auf der durchgehenden Achse Zinken 14.1 auf, welche das Halmgut weiter in Förderrichtung transportieren.

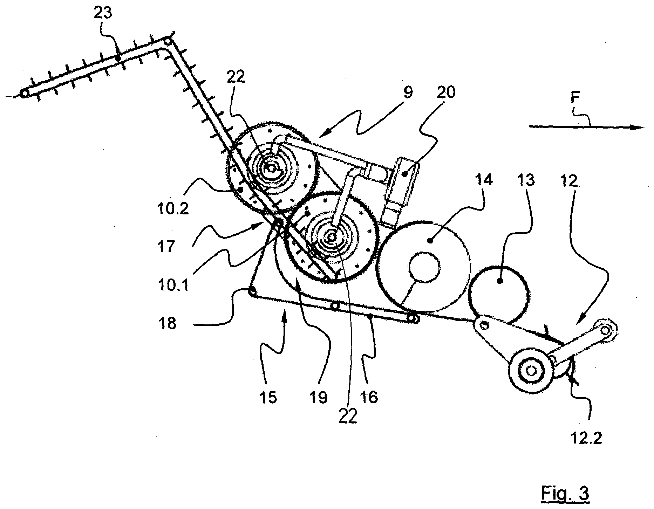

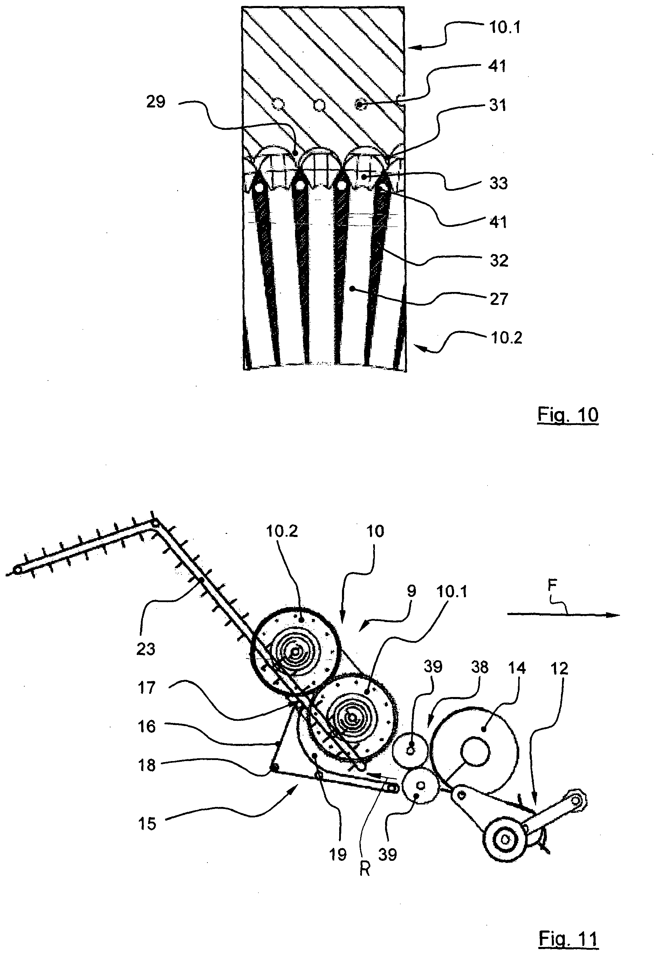

Der Einzugsschnecke 14 nachgeordnet ist eine Zuführeinrichtung 15 mit einem umlaufenden Transportband 16, auf welches das Halmgut von der Einzugsschnecke 14 gelangt und in einen Bereich eines Einzugstrichters 17 zwischen den Presstrommeln 10.1, 10.2. einläuft. Das Transportband 16 ist antreibbar und auf mehreren Rollen 18 derart geführt, dass das Transportband 16 eine erste Presstrommel 10.1 bereichsweise umschlingt. Dabei verringert sich der Abstand zwischen dem Transportband 16 und der Presstrommel 10.1 fortwährend, vorzugsweise kontinuierlich, in Förderrichtung R (Fig. 11) des Halmgutes zur Bildung eines kanalartigen Vorverdichtungsbereichs 19. Der Vorverdichtungsbereich 19 weist dabei, bedingt durch eine Breite des Transportbandes 16, welche zumindest so breit ist wie die Presstrommeln 10.1, 10.2 oder die Arbeitsbreite der Presstrommeln 10.1, 10.2, eine über seine Länge der Erstreckung konstante Breite auf. Die Breite des Vorverdichtungsbereichs 19 entspricht damit in etwa der Breite der Presstrommeln 10.1, 10.2 oder zumindest der Arbeitsbreite derselben. Der Umschlingungswinkel des Transportbandes 16 gegenüber der Presstrommel 10.1 beträgt dabei zumindest 20°, bevorzugt liegt der Umschlingungswinkel aber in einem Winkelbereich zwischen 30° und 180°. Das in Förderrichtung R gesehen vordere Ende des Transportbands 16 ist bis dicht an bzw. unter die Einzugsschnecke 14 geführt (Fig. 2 und 3).

In der Fig. 3 ist weiterhin erkennbar, dass die Pelletiermaschine 1 ein Sauggebläse 20 aufweist, mit Hilfe dessen Pressstaub aus dem Bereich der Presstrommeln 10.1, 10.2 abgesaugt werden kann.

Erkennbar ist in der Fig. 3 ebenfalls, dass in jeder Presstrommel 10.1, 10.2 ein Hohlraum 21 ausgebildet ist, in dem jeweils eine Förderschnecke 22 zum Abtransportieren des pelletierten Halmgutes angeordnet ist. Über diese Förderschnecke 22 gelangt das pelletierte Halmgut auf ein seitlich an den Presstrommeln 10.1, 10.2 vorbeilaufendes Förderband 23 (Fig. 11). Mit Hilfe des Förderbandes 23 wird pelletiertes Halmgut in den Bunker 6 befördert.

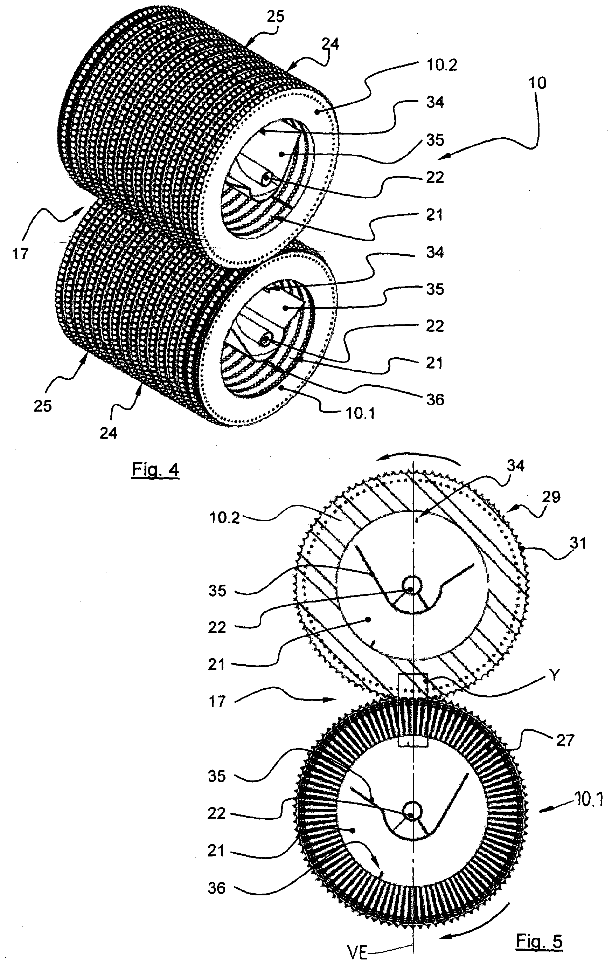

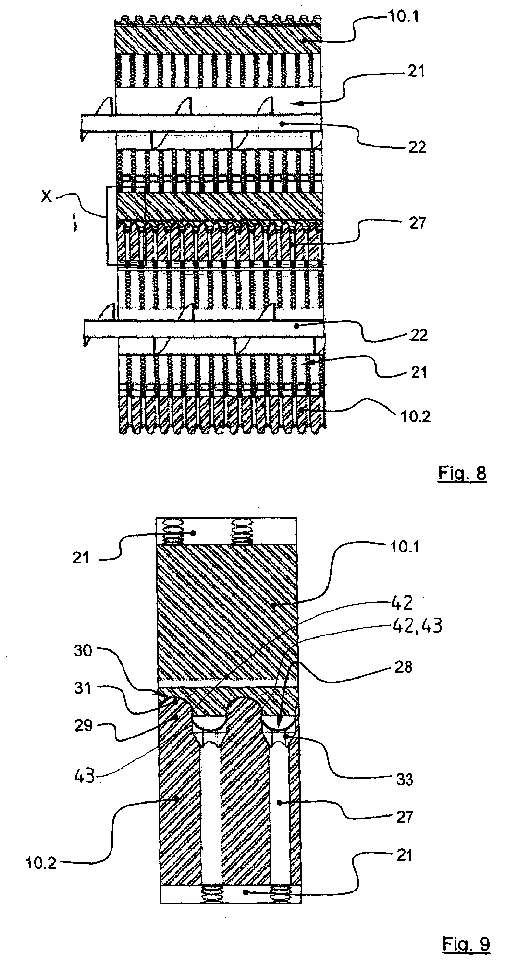

In den Fig. 4 bis 10 und 16 bis 23 ist die Anordnung und Ausbildung der Presstrommeln 10.1, 10.2 näher beschrieben. Beide Presstrommeln 10.1, 10.2 sind gleich ausgebildet und vorzugsweise auch gleich bemessen. Vor allem verfügen die Presstrommeln 10.1, 10.2 im gezeigten Ausführungsbeispiel über gleiche Breiten und gleiche Durchmesser. Es ist erkennbar, dass die Presstrommeln 10.1, 10.2 gegensinnig angetrieben werden (Pfeile in Fig. 5) und jeweils eine gleiche Anzahl in axialer Richtung nebeneinander abwechselnd umlaufende Aufnahmenuten 24 und Druckringe 25 aufweisen. Die Druckringe 25 der jeweils einen Presstrommel 10.1, 10.2 greifen dabei in die Aufnahmenuten 24 der jeweils anderen Presstrommel 10.2, 10.1 ein.

Bei gemäß im gezeigten Ausführungsbeispiel gleich ausgebildeten Presstrommeln 10.1, 10.2 werden diese gegensinnig mit gleicher Drehzahl angetrieben. Weil die in die Aufnahmenuten 24 eingreifenden Druckringe 25 einen größeren Durchmesser aufweisen als die Aufnahmenuten 24, ist die Winkelgeschwindigkeit am Außenumfang der Druckringe 25 größer als im Nutengrund 28 der jeweiligen Aufnahmenut 24. Dadurch kommt es zu einem Schlupf des in jeweils eine offene Aufnahmenut 24 eingreifenden Druckrings 25 mit einer größeren Umfangsgeschwindigkeit.

Dort, wo die Druckringe 25 in die Aufnahmenut 24 eingreifen, kommt es zu einer Überlappung A. Das größte Maß der Überlappung A befindet sich in einer gedachten Verbindungsebene VE (Fig. 5) der Drehachsen D der beiden Presstrommeln. Dort befindet sich der sogenannte Hochverdichtungsbereich, in dem der zuvor erläuterte Schlupf besonders auftritt.

Es ist erkennbar, dass jede Presstrommel 10.1, 10.2 radialgerichtete Presskanäle 27 aufweist, die innerhalb der Aufnahmenuten 24 angeordnet sind und sich radial von einem Nutengrund 28 der Aufnahmenuten 24 in Richtung der jeweiligen Drehachse D der Presstrommel 10.1, 10.2 erstrecken und in den Hohlraum 21 münden. Der Hohlraum 21 wird über die Presskanäle 27 so mit den Aufnahmenuten 24 verbunden. Der vorzugsweise gleiche Durchmesser aller insbesondere zylindrischen Presskanäle 27 kann der Breite der Aufnahmenuten 24 entsprechen, ist aber vorzugsweise kleiner.

Alle Druckringe 25 beider Presswalzen 10.1, 10.2 sind an gegenüberliegenden Seiten begrenzt von Ringwandungen 42, 43. Jede Ringwandung 42, 43 liegt in einer Ebene, die die Drehachsen D der Presstrommeln 10.1, 10.2 rechtwinklig schneidet. Die beiden gegenüberliegenden Ringwandungen 42, 43 jedes Druckrings 25 verlaufen parallel zueinander. Die Abstände gegenüberliegender Ringwandungen 42, 43 jedes Druckrings 25 und zueinander gerichtete Ringwandungen 42, 43 benachbarter Druckringe 25, die jeweils eine Aufnahmenut 24 beidseitig begrenzen, sind gleich, wodurch die gleiche Breite jedes Druckrings 25 der gleichen Breite jeder Aufnahmenut 24 entspricht. Auf diese Weise greifen die Druckringe 25 im Überlappungsbereich der Verbindungsebene VE, also im Hochverdichtungsbereich, sowie kurz davor und dahinter - abgesehen von einem technisch notwendigen geringen Spiel - passgenau ineinander ein, sodass im Bereich der Verbindungsebene VE die Ringwandungen 42, 43 benachbarter Druckringe 25 unterschiedlicher Presswalzen 10.1, 10.2 aneinander anliegen oder zumindest nahezu aneinander anliegen. Dort, wo die Ringwandungen 42, 43 am Außenumfang der Druckringe 25 enden, entstehen Schneidkanten. Diese führen dazu, dass beim kurz vor dem Erreichen der Verbindungsebene VE erfolgenden Eintauchen der Druckringe 25 in die Aufnahmenuten 24 das Halmgut von den Schneidkanten geschnitten wird.

Entsprechend den Darstellungen können die Druckringe 25 radial außenliegend über den Umfang verteilte Vorsprünge aufweisen, welche im gezeigten Ausführungsbeispiel als Zähne 29 ausgebildet sind. Die Zähne 29 können in axialer Richtung der Presstrommeln 10.1, 10.2 mit einer bogenförmigen Kontur 30 versehen, aber auch gerade sein. Korrespondierend hierzu kann der Nutgrund 28 ebenfalls eine bogenförmige Kontur aufweisen. Insbesondere aus der Fig. 10 ist erkennbar, dass die Zahnspitzen 31 der Zähne 29 beim Pressvorgang, also wenn die beiden Presstrommeln 10.1, 10.2 miteinander in Eingriff gelangen, gegenüberliegend zu zwischen den Presskanälen 27 ausgebildeten Wandstegen 32 angeordnet sind. In der Fig. 10 ist ebenfalls erkennbar, dass die Presskanäle 27 im Bereich des Nutengrundes 28 jeweils einen trichterförmigen Einführbereich 33 aufweisen.

Halmgut als Material wird vom Boden B mittels der Aufnahmevorrichtung 12 aufgenommen und über das Gitter 7 der Einzugsschnecke 14 zugeführt, welche das Halmgut in Richtung der Mitte der Pelletiermaschine 1 zusammenführt. Über die Einzugsschnecke 14 gelangt somit das Halmgut auf das Transportband 16 der Zuführeinrichtung 15, wobei das Halmgut in dem Vorverdichtungskanal 19 in Richtung des Einzugstrichters 17 stetig vorverdichtet wird. Durch die Bewegung der Presstrommeln 10.1, 10.2 wird das Halmgut im Bereich des Einzugstrichters 17 von den Zähnen 29 erfasst und mit der fortlaufenden Bewegung in die Presskanäle 27 gedrückt bzw. gepresst. Die Zähne 29 führen dabei, vorzugsweise zusammen mit den Schneidkanten am Außenumfang der Druckringe 25, einen Trenn- oder Vereinzelvorgang von definierten Halmgutabschnitten durch, welche in die Presskanäle 27 gedrückt werden. Durch das sich ständig verkleinernde, für das Halmgut zur Verfügung stehende Volumen erfolgt eine Verdichtung oder Pressung des Halmgutes. Der trichterförmige Einführbereich 33 der Presskanäle 27 sorgt zum einen für eine weitere Verdichtung und Pressung des Halmgutes und zum anderen dafür, dass die Wandstege 32 zwischen den Presskanälen 27 möglichst schmal sind. Dadurch stehen die Zahnspitzen 31 den Wandstegen 32 unmittelbar auf einer möglichst kleinen Fläche gegenüber, sodass eine möglichst effektive Pressung mit einer möglichst kleinen Blindleistung, also der Anteil der Drehbewegung der Presstrommeln 10.1, 10.2, welcher nicht zum Pressvorgang beiträgt, erfolgen kann.

Wenn das Halmgut aus den Presskanälen 27 in den Hohlraum 21 eintritt, wird dieses über einen feststehenden Abstreifer 34 abgestreift oder abgeschlagen, sodass einzelne pelletartige kompaktierte Halmgutabschnitte entstehen, welche in eine nach oben grundsätzlich trichterförmig offene bzw. trogförmige Auffangvorrichtung 35 fallen. Sich unterhalb der Auffangvorrichtung 35 befindendes kompaktiertes Halmgut wird über einen sich mit den Presstrommeln 10.1, 10.2 mitdrehenden und an der Innenseite im Hohlraum 21 der Presstrommeln 10.1, 10.2 angeordneten Mitnehmer 36 ergriffen und nach oben in die Auffangvorrichtung 35 befördert. Im Grund der Auffangvorrichtung 35 ist die Förderschnecke 22 vorgesehen, welche mittels einer schraubenlinienförmigen Ausbildung das kompaktierte Halmgut aus dem Hohlraum 21 heraus auf das Förderband 23 befördert, welches das fertig pelletierte Halmgut in den Bunker 6 befördert bzw. transportiert. In Richtung des Förderbandes 23 ist der Hohlraum 21 mit einer trichterförmigen Wand 37, welche mittig den Durchtritt des pelletierten Halmgutes erlaubt, abgeschlossen.

Entsprechend der Darstellung der Fig. 10 sind dort innerhalb der Presstrommeln 10.1, 10.2 angeordnete Heiz- und/oder Kühlkanäle 41 erkennbar, welche vorzugsweise innerhalb der Wandstege 32 verlaufen. Die Heiz- und/oder Kühlkanäle 41 temperieren die Presstrommeln 10.1, 10.2 im Bereich der Presskanäle 27 derart, dass der Pressvorgang optimiert erfolgen kann, sodass das Halmgut beispielsweise nicht an den Wänden der Presskanäle 27 verklebt und auch durch den Pressvorgang eine optimierte hohe Verdichtung des Halmgutes erfolgen kann.

In der Fig. 11 ist eine zweite Ausführung einer Pelletiertiermaschine 1 mit der erfindungsgemäßen Pelletiervorrichtung 10 und Zuführvorrichtung 15 erkennbar, bei welcher anstatt eines Selektierers 13 ein Steinbrecher 38, bestehend aus zwei sich gegeneinander drehenden Trommeln 39, vorgesehen ist. An die untere Trommel 39 ist das in Förderrichtung R vornliegende Ende des Transportbands 16 herangeführt. Der Steinbrecher 38 ist zwischen der Aufnahmevorrichtung 12 und der Zuführeinrichtung 15 angeordnet und zertrümmert Steine oder ähnliches, welche von der Aufnahmevorrichtung 12 mit aufgenommen worden sind.

Die Fig. 12 und 13 zeigen eine weitere Ausführung der Pelletiermaschine 1 mit der erfindungsgemäßen Pelletiervorrichtung 10 und Zuführeinrichtung 15, wobei hier das Paar von Presstrommeln 9 mit den Presstrommeln 10.1, 10.2 sowie die Zuführeinrichtung 15 gegenüber der ersten Ausführung im Wesentlichen um 90° gedreht angeordnet ist, sodass die Drehachsen D der Presstrommeln 10.1, 10.2 und der Rollen 18 der Zuführeinrichtung 15 gegenüber einer Vertikalen geneigt nach oben ausgerichtet sind. Wie bei der ersten Ausführung sind hier auch eine Aufnahmevorrichtung 12, ein Selektierer 13 sowie eine Einzugsschnecke 14 vorhanden, wobei hier bei der Einzugsschnecke 14 die mittig vorgesehenen Zinken 14.1 deutlich sichtbar sind. Ebenso deutlich sichtbar ist in der Fig. 13 das Gitter 7, auf welches das von der Aufnahmevorrichtung 12 aufgenommene Halmgut befördert wird.

Als Besonderheit weist diese Ausführung eine Einführtrommel 40 auf, welche der Einzugsschnecke 14 nachgeordnet ist und das Halmgut von der Einzugsschnecke 14 zu der Zuführeinrichtung 15 weiterleitet. Die Ausrichtung der Drehachse der Einführtrommel 40 entspricht der Ausrichtung der Drehachse D der Presstrommeln 10,1, 10.2, indem die Drehachsen D parallel zueinander verlaufen, wobei die Einführtrommel 40 eine schneckenförmige bzw. schraubenlinienförmige Leitstruktur für die Weiterleitung des Halmgutes auf ihrer Oberfläche aufweist. Da das pelletierte Halmgut bei dieser Ausführung nicht seitlich aus den Presstrommeln 10,1, 10.2 herausbefördert werden muss, sondern, bedingt durch die Schwerkraft, nach unten herausfallen kann, ist das Förderband 23 für den Transport des pelletierten Halmgutes in den Bunker 6 unterhalb der Presstrommeln 10.1, 10.2 angeordnet. Vorteilhaft kann bei dieser Ausführung auf eine trogförmige Auffangvorrichtung 35 sowie auf die im Hohlraum 12 angeordnete Förderschnecke 22 verzichtet werden.

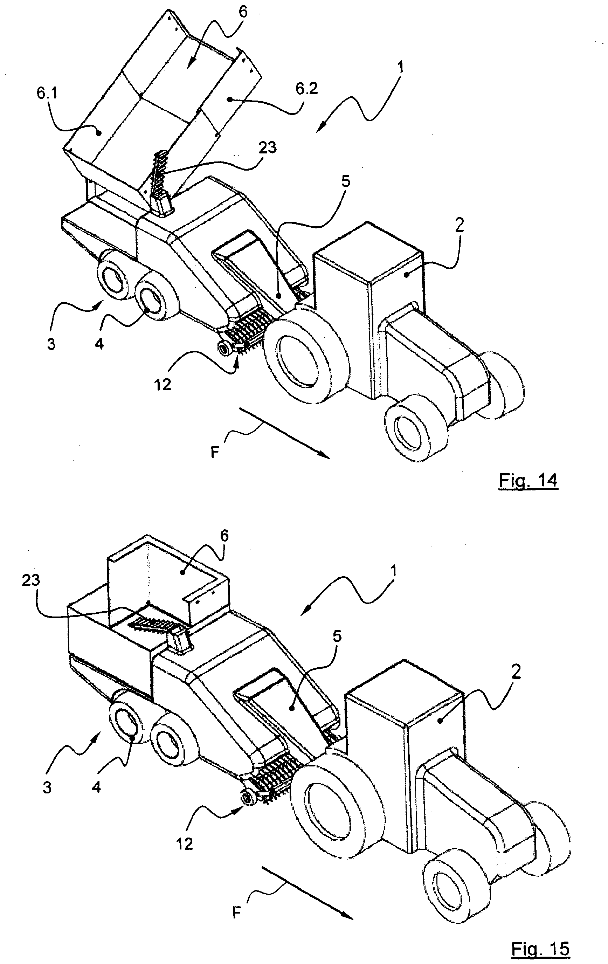

Die Fig. 14 und 15 zeigen die Pelletiermaschine 1 mit dem Bunker 6 in jeweiligen verschiedenen Positionen des Bunkers 6. Der Bunker 6 besteht dabei aus zwei Elementen 6.1 und 6.2, wobei ein Element 6.2 gegenüber dem anderen Element 6.1 für eine Vergrößerung des Bunkerinhaltes ausfahrbar ausgeführt ist. In der Fig. 14 ist der Bunker 6 aufgeschwenkt dargestellt, wobei das Förderband 22 für eine kollisionsfreie Aufschwenkbewegung aufgestellt ist. Diese Position ist eine Zwischenstellung hin zu einer Ablage- und Transportstellung des Bunkers 6, wie sie in der Fig. 15 gezeigt ist. Dabei ist die Breite der Pelletiermaschine 1 verringert, sodass die Pelletiermaschine 1 auf einer öffentlichen Straße bewegt werden kann.

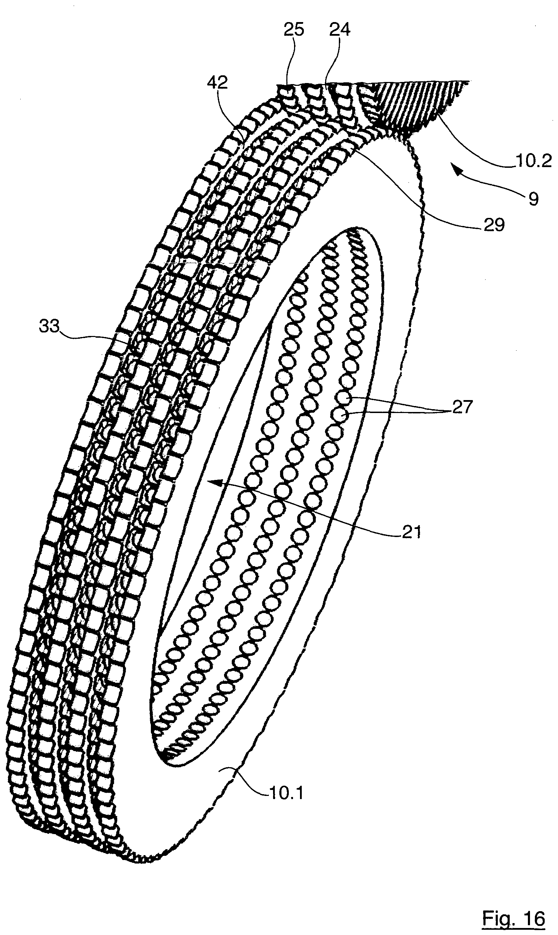

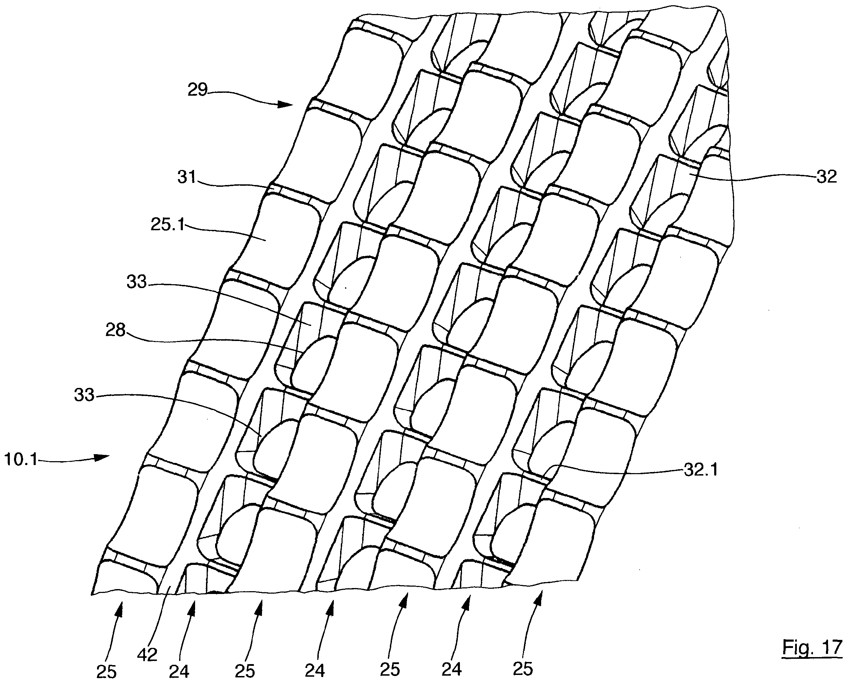

In Fig. 16 ist noch einmal vergrößert eine Presstrommel 10.1 dargestellt und andeutungsweise die zugeordnete Presstrommel 10.2 mit ihren Aufnahmenuten 24 und den Druckringen 25 sowie den inneren Hohlräumen 21 und den Presskanälen 27. Zur besseren Veranschaulichung ist vergrößert noch einmal in Fig. 17 ausschnittsweise der Bereich der Aufnahmenuten 24 und der Druckringe 25 dargestellt.

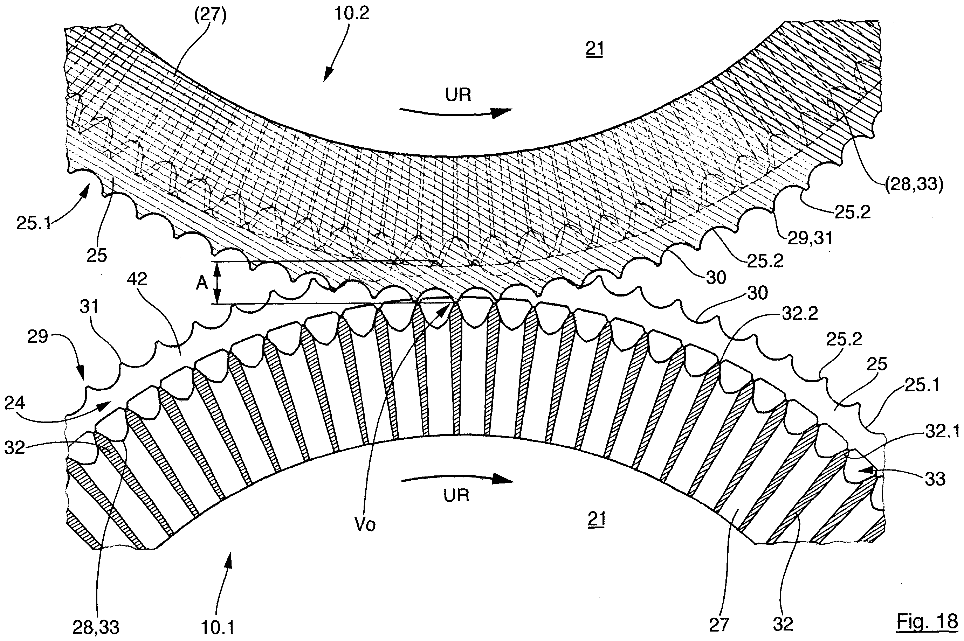

Die Ausführungsbeispiele der Fig. 18 bis 23 sind jeweils Querschnittsdarstellungen im Bereich einer Aufnahmenut 24 und dem zugeordneten Druckring 25.

In dem Ausführungsbeispiel nach Fig. 18 hat der Druckring 25 zwischen jeweils zwei Vorsprünge bildenden Zähnen 29 eine Vertiefung in Gestalt eines Raums 25.1 mit einem Wandungsbereich 25.2, der gewölbt ausgebildet ist. Zu diesem Wandungsbereich 25.2 bzw. Raum 25.1 gehören auch die Zähne 29 mit der jeweiligen Zahnspitze 31. Ersichtlich ist der Wandungsbereich 25.2 in einer Zahnlücke zwischen zwei benachbarten Zähnen 29 einwärts gewölbt, d.h. zur Drehachse hin ausgerichtet, wobei der Wandungsbereich 25.2 jeweils seitlich durch die Zähne 29 mit den Zahnspitzen 31 begrenzt ist.

Das Durchlaufen der Verbindungsebene VE (Fig. 5) durch die Drehachse D der beiden Presstrommeln 10.1, 10.2 ist in den Fig. 18 bis 23 jeweils durch Vo dargestellt. Dort trifft zumindest annähernd die Zahnspitze 31 des Zahns 29 des Wandungsbereiches 25.2 des Raumes 25.1 auf die Zahnspitze 32.1 des Wandsteges 32, sodass diese zusammen in Umlaufrichtung UR der Presstrommeln 10.1 und 10.2 im Hochverdichtungsbereich eine Art Schließeinrichtung bilden, und zwar an dem Wandsteg 32, der den Presskanal 27 in Umlaufrichtung UR nach vorne hin begrenzt. Ersichtlich ist der in Umlaufrichtung vor dem Presskanal 27 der Aufnahmenut 24 gelegene Wandsteg 32 gerade noch nicht im Kontaktbereich der dortigen Zahnspitze 32.1 des benachbarten Zahnes 29 des Druckringes 25.

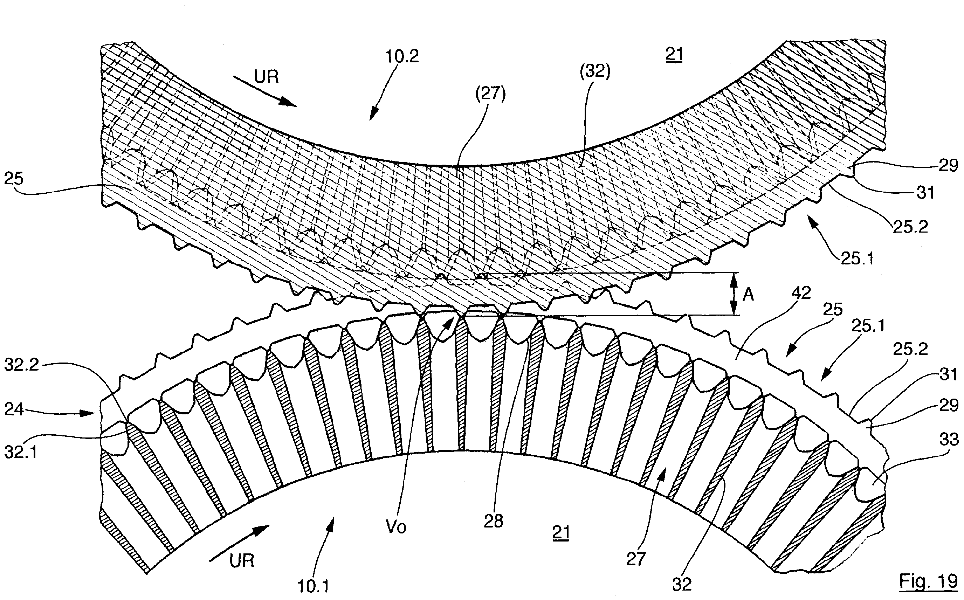

In Fig. 18 ist der Wandungsbereich 25.2 des Raumes 25.1 des Druckringes 25 einwärts gewölbt ausgebildet, wohingegen in dem Ausführungsbeispiel nach Fig. 19 zwischen zwei Zähnen 29 der Wandungsbereich 25.2 des Raumes 25.1 des Druckringes 25 geradlinig ausgebildet ist.

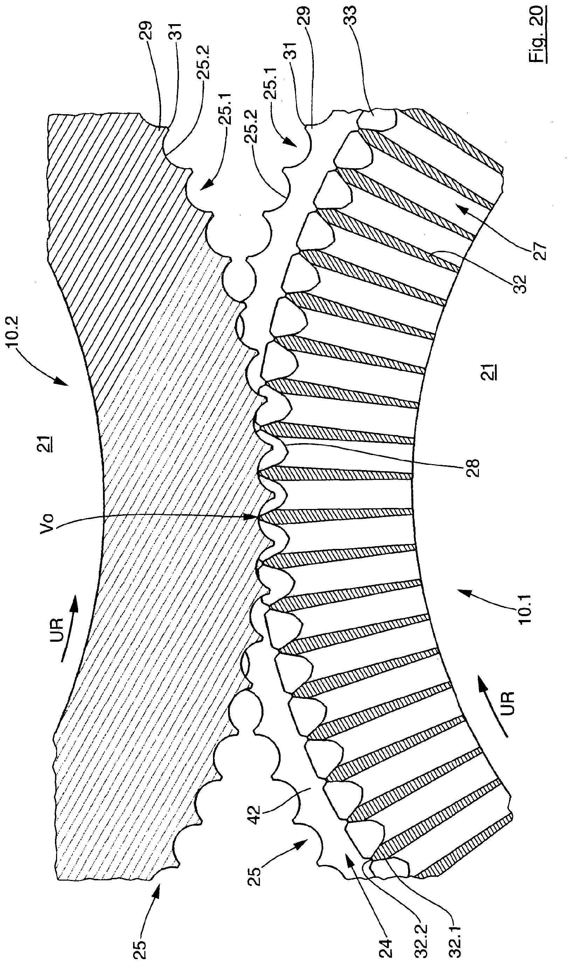

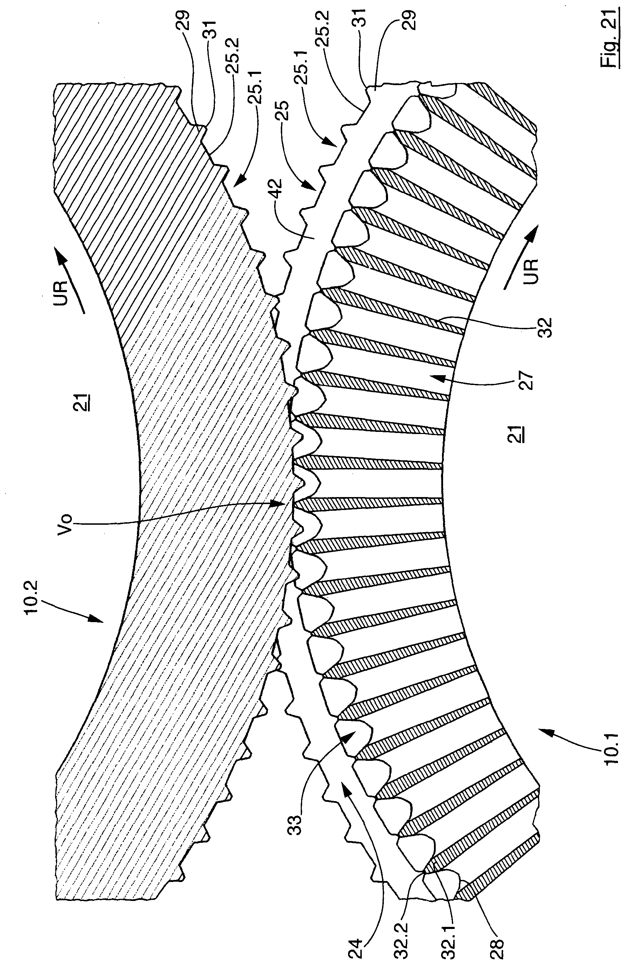

In den Fig. 20 und 21 sind alternative Ausführungsbeispiele dargestellt, die im Wesentlichen vom Grundsätzlichen her gleich gestaltet sind, wobei diese unterschiedlich gestaltete Wandungen 25.2 des Raumes 25.1 des Druckringes 25 zeigen, nämlich einen Wandungsbereich 25.2 in Fig. 20, der einwärts gewölbt ausgebildet ist und in Fig. 21 einen Wandungsereich 25.2 des Raumes 25.1 des Druckringes 25, der zwischen zwei Zähnen 29 geradlinig ausgebildet ist. In beiden Ausführungsbeispielen sind die Anordnungen der Aufnahmenut 24 und des Druckringes 25 derart aufeinander abgestimmt, dass beim Passieren der Verbindungsebene VE (Fig. 5) zwischen zwei Presstrommeln 10.1 und 10.2, also bei Vo in Fig. 20 und Fig. 21, der Wandsteg 32 der Aufnahmenut 24 mit der Zahnspitze 32.2 des Zahnes 32.1 des Druckrings 25 in etwa mittig auf den Wandungsbereich 25.2 des Raumes 25.1 ausgerichtet ist, sodass der Zahn 29 des jeweiligen Druckrings 25 mittig auf den Presskanal 27 im Nutengrund 28 der jeweiligen Aufnahmenut 24 weist. Dabei greift der jeweilige Zahn 29 des betreffenden Druckrings 25 beim Durchlaufen der Verbindungsebene VE in den Einführbereich 33 zwischen zwei benachbarte Wandstege 32 ein. Außerdem greift beim Durchlaufen der Verbindungsebene VE ein Zahn 32.1 eines jeweiligen Wandstegs 32 in den Raum 25 zwischen zwei benachbarten Zähnen 29 der Druckringe 25 ein, und zwar so weit, dass die Zahnspitze 32.2 des jeweiligen Wandstegs 32 zumindest nahe, vorzugsweise bis auf wenige Zehntelmillimeter, an den zugeordneten Wandungsbereich 25.2 des Raums 25.1 zwischen zwei benachbarten Zähnen 29 am Außenumfang des jeweiligen Druckrings 25 heranbewegt ist. Auf diese Weise ist der Abstand der Drehachsen D der Presstrommeln 10.1, 10.2 bei den Ausführungsbeispielen der Fig. 20 und 21 kleiner als bei den Ausführungsbeispielen der Fig. 18 und 19, und zwar etwa um die Hälfte eines Zahns 29 kleiner. Somit können diese Zähne 29 der Druckringe 25 noch beim Nachstopfen helfen.

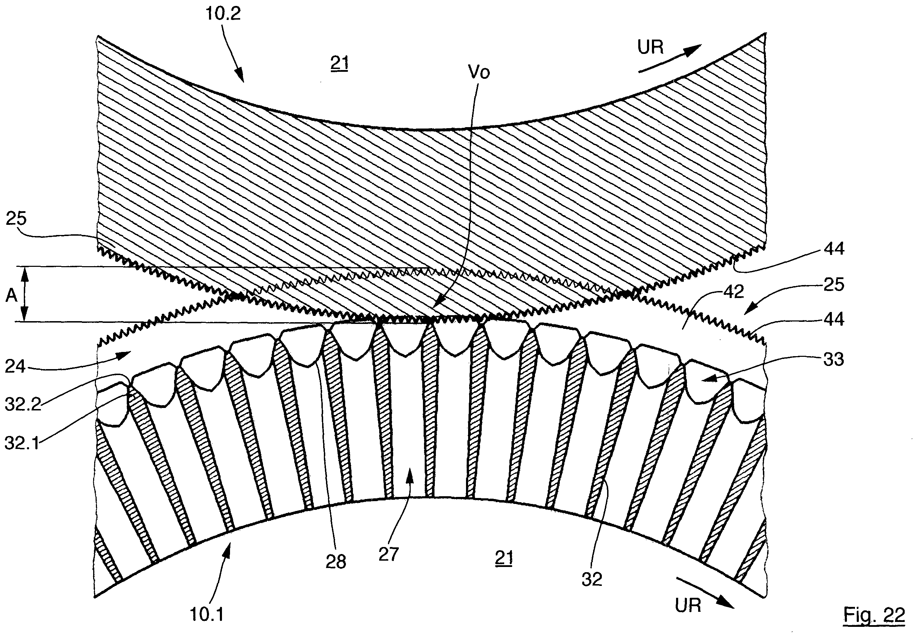

In der Fig. 22 ist ein weiteres alternatives Ausführungsbeispiel dargestellt, dass den Ausführungsbeispielen nach Fig. 18 und 19 ähnelt, mit dem Unterschied, dass in diesem Ausführungsbeispiel die jeweiligen Druckringe 25 der Presstrommeln 10.1 und 10.2 mit einer engen Sägezahnprofilierung 44 versehen sind. Auf diese Weise sind die Wandstege 32 beim Durchlaufen der Verbindungsebene VE der Drehachsen der Presstrommeln 10.1 und 10.2 (Fig. 5), also beim Durchlaufen von Vo, auf den Außendurchmesser des zugeordneten Druckringes 25 zubewegt mit einem Minimalabstand zwischen der Zahnspitze 32.2 des Wandsteges 32 und dem Außendurchmesser des Druckringes 25. In Fig. 22 ist auch das Maß A der maximalen Eintauchtiefe bzw. Überlappung des Druckringes 25 in die zugeordnete Aufnahmenut 24 gezeigt.

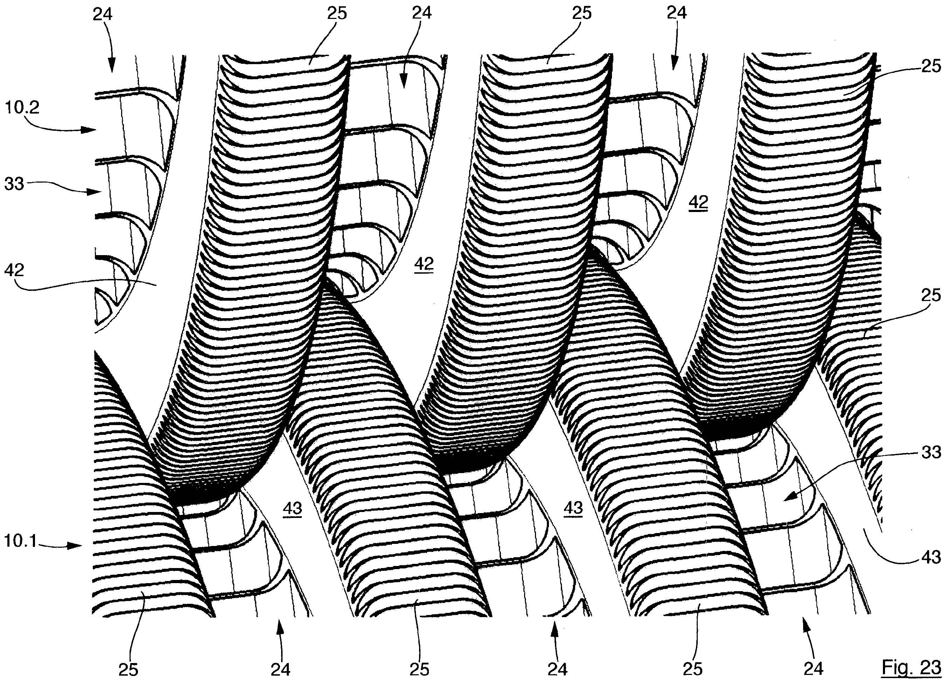

In perspektivischer Ansicht verdeutlicht die Fig. 23 noch einmal das Ausführungsbeispiel nach der Fig. 22. Hier ist zu sehen, wie die jeweiligen Druckringe 25 der einen Presstrommel 10.2 oder 10.1 in die zugeordneten Aufnahmenuten 24 der anderen Presstrommel 10.1 oder 10.2 eintauchen, sodass jeder Druckring 25 der Presstrommel 10.1 oder 10.2 beim Durchlaufen der Verbindungsebene VE (Fig. 5), also beim Durchlaufen des Punktes Vo in Fig. 22, derart tief in die Aufnahemnut 24 der Presstrommel 10.1 eintaucht, sodass der Druckring 25 der Presstrommel 10.2 von zwei Druckringen 25 der Presstrommel 10.1 zu beiden Seiten seitlich begrenzt und damit überlappt wird.

Bei jeder der unterschiedlichen Gestaltungen der Vorsprünge und der dazwischenliegenden Vertiefungen am Außenumfang der Druckringe 25 sind die beidseitig jeden Druckring 25 begrenzenden Ringwandungen 42, 43 ununterbrochen. Dadurch befinden sich auch in den Bereichen der Vertiefungen zwischen aufeinanderfolgenden Zähnen 29 oder sonstigen Vorsprüngen, insbesondere im Raum 25.1 zwischen benachbarten Zähnen 29, schmalere Abschnitte der von den Vertiefungen bzw. Zahnlücken ununterbrochenen Ringwandungen 42, 43. Infolge der durchgehenden Ringwandungen 42, 43 auf beiden Seiten der Druckringe 25 befinden sich außen an den Ringwandungen 42, 43 auch durchgehende Schneidkanten. Durch die Zähne 29 mit dazwischenliegenden Zahnlücken am Außenumfang der Druckringe 25 sind die durchgehenden Schneidkanten in Umlaufrichtung bzw. in Richtung der Drehachse D gesehen, profiliert, und zwar bei mit aufeinanderfolgenden Zähnen 29 versehenen Druckringen 25 sägezahnartig. Bei beispielsweise bogenförmigen Vorsprüngen und Vertiefungen würden die Schneidkanten am Außenumfang der Ringwandungen 42, 43 einen wellenförmigen Verlauf aufweisen. Unabhängig vom Verlauf der Schneidkanten überlappen die Schneidkanten der Druckringe 25 einer Presstrommel 10.1 oder 10.2 im Hochverdichtungsbereich die Schneidkanten der Druckringe 25 der anderen Presstrommel 10.1 oder 10.2, und zwar auch in den Bereichen der Vertiefungen bzw. Zahnlücken. Dadurch wird eine ständige, ununterbrochene Überlappung der Schneidkanten beider Presstrommeln 10.1 und 10.2 im Hochverdichtungsbereich und auch im Bereich Vo gewährleistet.

**Bezugszeichenliste**

| | | | |
|---|---|---|---|
| 1 | Pelletiermaschine | 32.2 | Zahnspitze |
| 2 | Zugfahrzeug | 33 | Einführbereich |
| 3 | Fahrwerk | 34 | Abstreifer |
| 4 | Rad | 35 | Auffangvorrichtung |
| 5 | Deichsel | 36 | Mitnehmer |
| 6 | Bunker | 37 | Wand |
| 6.1 | Bunkerelement | 38 | Steinbrecher |
| 6.2 | Bunkerelement | 39 | Trommel |
| 7 | Gitter | 40 | Einführtrommel |
| 9 | Presstrommelpaar | 41 | Heiz- und/oder Kühlkanal |
| 10 | Pelletiervorrichtung | 42 | Ringwandung |
| 10.1 | Presstrommel | 43 | Ringwandung |
| 10.2 | Presstrommel | 44 | Sägezahnprofilierung |
| 11 | Lagerbock | 50 | Getriebe |
| 12 | Aufnahmevorrichtung | | |
| 12.1 | Walze | A | Überlappung |
| 12.2 | Zinken | B | Boden |
| 13 | Selektierer | D | Drehachse |
| 14 | Einzugsschnecke | F | Fahrtrichtung |
| 14.1 | Zinken | R | Förderrichtung |
| 15 | Zuführeinrichtung | UR | Umlaufrichtung |
| 16 | Transportband | VE | Verbindungsebene |
| 17 | Einzugstrichter | Vo | Hochverdichtungsbereich |
| 18 | Rolle | | |
| 19 | Vorverdichtungsbereich | | |
| 20 | Sauggebläse | | |
| 21 | Hohlraum | | |
| 22 | Förderschnecke | | |
| 23 | Förderband | | |
| 24 | Aufnahmenut | | |
| 25 | Druckring | | |
| 25.1 | Raum | | |
| 25.2 | Wandungsbereich | | |
| 27 | Presskanal | | |
| 28 | Nutengrund | | |
| 29 | Zahn | | |
| 30 | bogenförmige Kontur | | |
| 31 | Zahnspitze | | |
| 32 | Wandsteg | | |
| 32.1 | Zahn | | |

## Patentansprüche

1. Vorrichtung zum Kompaktieren von faserigem Pflanzengut, insbesondere zum Kompaktieren von Halmgut, mit einer Zuführeinrichtung (15) zum Zuführen des zu kompaktierenden Pflanzen- bzw. Halmguts, mit mindestens einem Paar von in gegensinnige Umlaufbewegungen versetzbaren Presstrommeln (10.1, 10.2), wobei eine Presstrommel (10.1, 10.2) auf ihrem Umfang entlang ihrer axialen Längserstreckung Aufnahmenuten (24) und eine andere Presstrommel (10.1, 10.2) entlang ihrer axialen Längserstreckung Druckringe (25) aufweist, mit einem inneren Hohlraum (21) in mindestens einer Presstrommel (10.1, 10.2), der über eine Vielzahl von über den Umfang verteilten, radial ausgerichteten Presskanälen (27) mit den Aufnahmenuten (24) verbunden ist, und jede der Presstrommeln (10.1, 10.2) auf ihrem Umfang entlang ihrer axialen Längserstreckung abwechselnd nebeneinander angeordnete Aufnahmenuten (24) und Druckringe (25) aufweist, wobei die Druckringe (25) der jeweils einen Presstrommel (10.1, 10.2) während der gegensinnigen Umlaufbewegung der Presstrommeln (10.1, 10.2) in die Aufnahmenuten (24) der anderen Presstrommel (10.1, 10.2) eingreifen, wobei an den Druckringen (25) ein umlaufendes radial außenliegende Vorsprünge aufweisendes Profil vorgesehen ist, das Profil am äußeren Umfang der Druckringe (25) vorgesehen ist, die Presstrommeln (10.1, 10.2) in den Aufnahmenuten (24) quer zu ihren Umlaufrichtungen (UR) ausgerichtete Wandstege (32) aufweisen, die zwischen benachbarten Presskanälen (27) angeordnet sind, **dadurch gekennzeichnet, dass** das Profil zwischen jeweils zwei benachbarten Vorsprüngen eine Vertiefung oder einen Raum (25.1) aufweist und dass eine höchste Stelle jeweils eines radial nach außen vorstehenden Vorsprungs der Druckringe (25) jeweils einer höchsten Stelle eines Wandstegs (32) der Aufnahmenuten (24) beim Durchlaufen der die beiden Drehachsen (D) der Presstrommeln (10.1,10.2) enthaltenen Verbindungsebene (VE) zwischen den Presstrommeln (10.1, 10.2) gegenüberliegt oder ein radial außenliegender Vorsprung der Druckringe (25) beim Durchlaufen der die beiden Drehachsen (D) der Presstrommeln (10.1,10.2) enthaltenen Verbindungsebene (VE) mit seiner höchsten Stelle zwischen benachbarten Wandstegen (32) der Aufnahmenuten (24) liegt und dabei vorzugsweise der jeweilige Vorsprung der Druckringe (25) in den Raum (25.1) zwischen benachbarten Wandstegen (32) mindestens teilweise eintaucht.

2. Vorrichtung nach Anspruch 1, **dadurch gekennzeichnet, dass** eine Außenkontur (30) der Vorsprünge in Richtung der Drehachsen (D) der Presstrommeln (10.1, 10.2) betrachtet an die Kontur der Aufnahmenuten (24) angepasst ist, vorzugsweise die Konturen der einander gegenüberliegenden Presstrommeln (10.1, 10.2) in der Ebene der Drehachsen (D) eine profilierte, vorzugsweise wellenförmige, Konturlinie bilden und/oder die Konturen der einander gegenüberliegenden Presstrommeln (10.1, 10.2) in der Ebene der Drehachsen (D) eine gemeinsame Konturlinie bilden.

3. Vorrichtung nach Anspruch 1 oder 2, **dadurch gekennzeichnet, dass** die beiden Presstrommeln (10.1, 10.2) in gegensinnige synchrone Umlaufbewegungen versetzbar sind und/oder beide Presstrommeln (10.1, 10.2) gleich ausgebildet und vorzugsweise auch gleich bemessen sind und/oder die Breiten der Aufnahmenuten (24) mit den Breiten der Druckringe (25) korrespondieren, vorzugsweise gleich sind.

4. Vorrichtung nach einem der vorhergehenden Ansprüche, **dadurch gekennzeichnet, dass** jeweils zwei benachbarte, beabstandete Vorsprünge eine dazwischenliegende Vertiefung oder einen dazwischenliegenden Raum (25.1) begrenzen.

5. Vorrichtung nach einem der vorhergehenden Ansprüche, **dadurch gekennzeichnet, dass** sowohl die Druckringe (25) und vorzugsweise auch die Aufnahmenuten (24) beider Presstrommeln (10.1, 10.2) von gegenüberliegenden, seitlichen Ringwandungen (42, 43) begrenzt sind, wobei alle Ringwandungen (42, 43) in senkrecht bzw. rechtwinklig die jeweilige Drehachse (D) der Presstrommeln (10.1, 10.2) schneidenden Ebenen liegen und die Ebenen aller Ringwandungen (42, 43) parallel zueinander verlaufen, wobei vorzugsweise die Abstände zwischen jeweils gegenüberliegenden Ringwandungen (42, 43) der Druckringe (25) der einen Presstrommel (10.1, 10.2) den Abständen zwischen jeweils gegenüberliegenden Ringwandungen (42, 43) der Druckringe (25) der anderen Presstrommel (10.1, 10.2) entsprechen.

6. Vorrichtung nach einem der vorhergehenden Ansprüche, **dadurch gekennzeichnet, dass** die Presskanäle (27) einen radial außen vorgesehenen Nutengrund (28) aufweisen, wobei jeder Presskanal (27) seinen Nutengrund (28) mit dem inneren Hohlraum (21) verbindet, und wobei bevorzugt jeder Nutengrund (28) von Wandungen der quer zur Umlaufrichtung (UR) der Presstrommeln (10.1, 10.2) ausgerichteten Wandstege (32) begrenzt ist.

7. Vorrichtung nach einem der vorhergehenden Ansprüche, **dadurch gekennzeichnet, dass** die oberen Enden (32.1) der quer zur Umlaufrichtung (UR) der Presstrommeln (10.1, 10.2) ausgerichteten Wandstege (32) als radial nach außen vorstehende Ausbuchtungen oder Zähne (32.1) mit Zahnspitzen (32.2) ausgebildet sind, wobei vorzugsweise die Ausbuchtungen oder Zähne (32.1) bzw. ihre Zahnspitzen (32.2) den Nutengrund (28) radial nach außen begrenzen.

8. Vorrichtung nach Anspruch 6 oder 7, **dadurch gekennzeichnet, dass** der Presskanal (27) auf der dem Nutengrund (28) zugewandten Seite einen trichterförmigen Einführbereich (33) aufweist.

9. Vorrichtung nach einem der vorhergehenden Ansprüche, **dadurch gekennzeichnet, dass** alle Druckringe (25) einer jeden Presstrommel (10.1, 10.2) während der gegensinnigen Umlaufbewegung der Presstrommeln (10.1, 10.2) beim Durchlaufen (Vo) der die beiden Drehachsen (D) der Presswalzen (10.1, 10.2) enthaltenen Verbindungsebene (VE) in die diesen Druckringen (25) zugeordneten Aufnahmenuten (24) der anderen Presswalze (10.1, 10.2) bis zumindest nahe an das obere Ende bzw. die Zahnspitze (32.2) des jeweiligen quer zur Umlaufrichtung (UR) der Presstrommeln (10.1, 10.2) ausgerichteten Wandstegs (32) der zugeordneten Aufnahmenut (24) der anderen Presstrommel (10.1, 10.2) eingreifen.

10. Vorrichtung nach einem der vorhergehenden Ansprüche, **dadurch gekennzeichnet, dass** jeder Druckring (25) der einen Presstrommel (10.1, 10.2) beim Durchlaufen (Vo) der die beiden Drehachsen (D) enthaltenen Verbindungsebene (VE) der Presstrommeln (10.1, 10.2) in der zugeordneten Aufnahmenut (24) der anderen Presstrommel (10.1, 10.2) von den dieser Aufnahmenut (24) der anderen Presstrommel (10.1, 10.2) benachbarten Druckringen (25) mit einem Überlappungsmaß (A) beidseitig begrenzt ist und/oder das Überlappungsmaß (A) dem Überlappungsmaß zwischen dem Außendurchmesser des Druckrings (25) der einen Presstrommel (10.1, 10.2) und dem Außendurchmesser des Druckrings (25) der anderen Presstrommel (10.1, 10.2) beim Durchlaufen (Vo) der Verbindungsebene (VE) entspricht.

11. Vorrichtung nach einem der vorhergehenden Ansprüche, **dadurch gekennzeichnet, dass** die Druckringe (25) der Presstrommeln (10.1, 10.2) wechselweise in die Aufnahmenuten (24) der Presstrommeln (10.1, 10.2) mit einem solchen Überlappungsmaß (A) eingreifen, dass mindestens beim Durchlaufen (Vo) der die beiden Drehachsen (D) der Presstrommeln (10.1, 10.2) enthaltenen Verbindungsebene (VE) stets eine Überlappung bzw. Überdeckung der die Druckringe (25) beidseitig begrenzenden Ringwandungen (42, 43) einer Presstrommel (10.1, 10.2) mit den die Druckringe (25) der anderen Presstrommel (10.1, 10.2) beidseitig begrenzenden Ringwandungen (42, 43) vorhanden ist.

12. Vorrichtung nach einem der vorhergehenden Ansprüche, **dadurch gekennzeichnet, dass** die höchsten Stellen der Vorsprünge der Druckringe (25) und der Wandstege (32) der Aufnahmenuten (24) jeweils paarweise eine Art Schließeinrichtung bilden, indem die höchsten Stellen der Vorsprünge der Druckringe (25) und die höchsten Stellen bzw. Zahnspitzen (32.2) der Wandstege (32) beim Durchlaufen der Verbindungsebene (VE) aufeinanderzu ausgerichtet sind und maximal ein geringes Abstandsmaß zueinander aufweisen.

13. Vorrichtung nach einem der vorhergehenden Ansprüche, **dadurch gekennzeichnet, dass** die jeweilige Vertiefung der Druckringe (25), vorzugsweise ein Wandungsbereich (25.2) eines Raums (25.1) zwischen zwei Vorsprüngen am Außenumfang der Druckringe (25), im Querschnitt geradlinig oder bezogen auf die jeweilige Drehachse (D) einwärts gewölbt ausgebildet ist.

14. Vorrichtung nach einem der vorhergehenden Ansprüche, **dadurch gekennzeichnet, dass** die Druckringe (25) wenigstens einer Presstrommel (10.1, 10.2) auf ihrem Außenumfang mit einer Wellenprofilierung, insbesondere einer Sägezahnprofilierung, versehen sind.

15. Vorrichtung nach einem der vorhergehenden Ansprüche, **dadurch gekennzeichnet, dass** in einer zwischen zwei höchsten Stellen benachbarter Vorsprünge sich befindenden Vertiefung oder Lücke der Druckringe (25) ein radial nach außen weisender Dorn angeordnet ist.

16. Vorrichtung nach einem der vorhergehenden Ansprüche, **dadurch gekennzeichnet, dass** die nach außen vorstehenden Vorsprünge am Außenumfang der Druckringe (25) als Zähne (29) ausgebildet sind, wobei die Zähne (29) bevorzugt an ihren höchsten Stellen Zahnspitzen (31) aufweisen und insbesondere zwischen jeweils zwei benachbarten Zähnen ein eine Zahnlücke bildender Raum (25.1) bzw. vertiefter Wandungsbereich (25.2) ausgebildet ist.

17. Vorrichtung nach einem der vorhergehenden Ansprüche, **dadurch gekennzeichnet, dass** äußere Umfangskanten der gegenüberliegende Seiten jedes Druckrings (25) bildenden Ringwandungen (42, 43) als Schneidkanten ausgebildet sind, wobei vorzugsweise jede Schneidkante des jeweiligen Druckrings (25) durch die in Umfangsrichtung aufeinanderfolgenden Vorsprünge bzw. Zähne (29) und dazwischenliegende Vertiefungen oder Räume (25.1) einen profilierten Verlauf in Umfangsrichtung aufweist und/oder die Schneidkanten aller Druckringe (25) der einen Presstrommel (10.1, 10.2) mindestens beim Durchlaufen (Vo) der die beiden Drehachsen (D) enthaltenden Verbindungsebene (VE) der Presstrommeln (10.1, 10.2) die Schneidkanten der anderen Presstrommel (10.1, 10.2) überlappen und dabei vorzugsweise die Schneidkanten der Druckringe (25) der einen Presstrommel (10.1, 10.2) in die mit diesen Druckringen (25) korrespondierenden Aufnahmenuten (24) der anderen Presstrommel (24) eingreifen.

18. Vorrichtung nach einem der vorhergehenden Ansprüche, **dadurch gekennzeichnet, dass** die Zuführeinrichtung (15) ein antreibbares Transportband (16) umfasst, welches das zu verpressende Gut, insbesondere zu kompaktierendes Pflanzen- oder Halmgut, in den Bereich eines Einzugtrichters (17) zwischen den Presstrommeln (10.1, 10.2) fördert und welches eine der beiden Presstrommeln (10.1, 10.2) zur Bildung eines Vorverdichtungsbereichs (19) bereichsweise über einen Winkel von zumindest 20° umschlingt, wobei der Vorverdichtungsbereich (19) über seine Länge eine konstante Breite aufweist, die mindestens der Arbeitsbreite der Presstrommeln (10.1, 10.2) entspricht und vorzugsweise sich der Abstand des Transportbands (16) zur Presstrommel (10.1, 10.2) in Förderrichtung insbesondere stetig verringert.

19. Vorrichtung nach Anspruch 18, **dadurch gekennzeichnet, dass** das Transportband (16) wenigstens eine Presstrommel (10.1, 10.2) über einen Winkelbereich von 30° bis 120° umschlingt.

20. Vorrichtung nach Anspruch 18 oder 19, **dadurch gekennzeichnet, dass** das Transportband (16) endlos ausgebildet und auf einer Anzahl von Rollen (18) geführt ist, wobei zumindest eine der Rollen (18) antreibbar ist und/oder zumindest eine der Rollen (18) in Bezug auf den Abstand zur Presstrommel (10.1, 10.2) verstellbar ist, vorzugsweise mehrere Rollen (18) oder alle Rollen (18) zusammen und gleichmäßig in Bezug auf den Abstand zur Presstrommel (10.1, 10.2) verstellbar sind.

21. Vorrichtung nach einem der Ansprüche 18 bis 20, **dadurch gekennzeichnet, dass** der Zuführeinrichtung (15) eine Einzugsschnecke (14) mit einer parallel zum Boden (B) und quer zur Fahrtrichtung (F) ausgerichteten Drehachse vorgeordnet ist.

22. Vorrichtung nach einem der Ansprüche 18 bis 21, **dadurch gekennzeichnet, dass** das Transportband (16) der Zuführeinrichtung (15) in Richtung seiner Breite parallel zu den Drehachsen (D) der Presstrommeln (10.1, 10.2) ausgerichtet ist und/oder ein in Zuführrichtung vornliegendes Ende der Zuführeinrichtung (15) sich über die in Zuführrichtung gesehen vorderste Stelle der vorderen Presstrommel (10.1, 10.2) hinweg in Richtung zur Aufnahmevorrichtung (12) erstreckt.

## Claims

1. An apparatus for compacting fibrous plant material, in particular for compacting stalk material, having a feeding device (15) for feeding the plant material or stalk material to be compacted, having at least one pair of press drums (10.1, 10.2) that are settable into opposite rotational movements, wherein one press drum (10.1, 10.2) has receiving grooves (24) on its circumference along its axial longitudinal extent and another press drum (10.1, 10.2) has compression rings (25) along its axial longitudinal extent, and having an internal cavity (21) in at least one press drum (10.1, 10.2), said internal cavity (21) being connected to the receiving grooves (24) via a multiplicity of radially oriented press channels (27) that are distributed over the circumference, and each of the press drums (10.1, 10.2) has receiving grooves (24) and compression rings (25) that are arranged alternately alongside one another on its circumference along its axial longitudinal extent, wherein the compression rings (25) of the in each case one press drum (10.1, 10.2) engage in the receiving grooves (24) of the other press drum (10.1, 10.2) during the opposite rotational movement of the press drums (10.1, 10.2), wherein a circumferential profile having radially external protrusions is provided on the compression rings (25), the profile being provided on the outer circumference of the compression rings (25), the press drums (10.1, 10.2) having, in the receiving grooves (24), wall webs (32) that are oriented transversely to the directions of rotation (UR) thereof, said wall webs (32) being arranged between adjacent press channels (27), **characterized in that** the profile has a depression or a space (25.1) between in each case two adjacent protrusions, and **in that** a highest point in each case of a radially outwardly projecting protrusion of the compression rings (25) is located in each case opposite a highest point of a wall web (32) of the receiving grooves (24) on passing between the press drums (10.1, 10.2) through the connecting plane (VE) containing the two rotation axes (D) of the press drums (10.1, 10.2) or a radially external protrusion of the compression rings (25) has its highest point located between adjacent wall webs (32) of the receiving grooves (24) on passing through the connecting plane (VE) containing the two rotation axes (D) of the press drums (10.1, 10.2) and in this case each particular protrusion of the compression rings (25) preferably dips at least in part into the space (25.1) between adjacent wall webs (32).

2. The apparatus as claimed in claim 1, **characterized in that** an outer contour (30) of the protrusions, as viewed in the direction of the rotation axes (D) of the press drums (10.1, 10.2), is adapted to the contour of the receiving grooves (24), preferably the contours of the mutually opposite press drums (10.1, 10.2) form a profiled, preferably undulating, contour line in the plane of the rotation axes (D), and/or the contours of the mutually opposite press drums (10.1, 10.2) form a common contour line in the plane of the rotation axes (D).

3. The apparatus as claimed in claim 1 or 2, **characterized in that** the two press drums (10.1, 10.2) are settable into opposite synchronous rotational movements and/or the two press drums (10.1, 10.2) are formed in an identical manner and preferably also have identical dimensions and/or the widths of the receiving grooves (24) correspond, and preferably are identical, to the widths of the compression rings (25).

4. The apparatus as claimed in one of the preceding claims, **characterized in that** in each case two adjacent, spaced-apart protrusions bound an intermediate depression or an intermediate space (25.1).

5. The apparatus as claimed in one of the preceding claims, **characterized in that** not only the compression rings (25) but preferably also the receiving grooves (24) of the two press drums (10.1, 10.2) are bounded by opposite, lateral annular walls (42, 43), wherein all the annular walls (42, 43) are located in planes that intersect the respective rotation axis (D) of the press drums (10.1, 10.2) in a perpendicular manner or at right angles, and the planes of all the annular walls (42, 43) extend parallel to one another, wherein preferably the distances between respectively opposite annular walls (42, 43) of the compression rings (25) of the one press drum (10.1, 10.2) correspond to the distances between respectively opposite annular walls (42, 43) of the compression rings (25) of the other press drum (10.1, 10.2).

6. The apparatus as claimed in one of the preceding claims, **characterized in that** the press channels (27) have a groove bottom (28) provided radially on the outside, wherein each press channel (27) connects its groove bottom (28) to the internal cavity (21), and wherein preferably each groove bottom (28) is bounded by walls of the wall webs (32) that are oriented transversely to the direction of rotation (UR) of the press drums (10.1, 10.2).

7. The apparatus as claimed in one of the preceding claims, **characterized in that** the upper ends (32.1) of the wall webs (32) that are oriented transversely to the direction of rotation (UR) of the press drums (10.1, 10.2) are configured as radially outwardly projecting protrusions or teeth (32.1) having tooth tips (32.2), wherein preferably the protrusions or teeth (32.1), or the tooth tips (32.2) thereof, bound the groove bottom (28) radially toward the outside.

8. The apparatus as claimed in claim 6 or 7, **characterized in that** the press channel (27) has a funnel-like introduction region (33) on the side facing the groove bottom (28).

9. The apparatus as claimed in one of the preceding claims, **characterized in that**, during the opposite rotational movement of the press drums (10.1, 10.2), on passing through (Vo) the connecting plane (VE) containing the two rotation axes (D) of the press rolls (10.1, 10.2), all the compression rings (25) of each press drum (10.1, 10.2) engage in the receiving grooves (24), assigned to these compression rings (25), of the other press roll (10.1, 10.2), at least as far as a point near the upper end or tooth tip (32.2) of the respective wall web (32), oriented transversely to the direction of rotation (UR) of the press drums (10.1, 10.2), of the associated receiving groove (24) of the other press drum (10.1, 10.2).

10. The apparatus as claimed in one of the preceding claims, **characterized in that**, on passing through (Vo) the connecting plane (VE), containing the two rotation axes (D), of the press drums (10.1, 10.2), each compression ring (25) of the one press drum (10.1, 10.2) is bounded on both sides with a degree of overlap (A) in the associated receiving groove (24) of the other press drum (10.1, 10.2) by the compression rings (25) adjacent to this receiving groove (24) of the other press drum (10.1, 10.2) and/or the degree of overlap (A) corresponds to the degree of overlap between the outside diameter of the compression ring (25) of the one press drum (10.1, 10.2) and the outside diameter of the compression ring (25) of the other press drum (10.1, 10.2) on passing through (Vo) the connecting plane (VE).

11. The apparatus as claimed in one of the preceding claims, **characterized in that** the compression rings (25) of the press drums (10.1, 10.2) engage alternately in the receiving grooves (24) of the press drums (10.1, 10.2) with such a degree of overlap (A) that, at least on passing through (Vo) the connecting plane (VE) containing the two rotation axes (D) of the press drums (10.1, 10.2), there is always an overlap between the annular walls (42, 43), bounding the compression rings (25) on both sides, of one press drum (10.1, 10.2) and the annular walls (42, 43) bounding the compression rings (25) of the other press drum (10.1, 10.2) on both sides.

12. The apparatus as claimed in one of the preceding claims, **characterized in that** the highest points of the protrusions of the compression rings (25) and of the wall webs (32) of the receiving grooves (24) in each case form in pairs a kind of closing device in that the highest points of the protrusions of the compression rings (25) and the highest points or tooth tips (32.2) of the wall webs (32) are oriented toward one another and have at most a small spacing from one another on passing through the connecting plane (VE).

13. The apparatus as claimed in one of the preceding claims, **characterized in that** each particular depression of the compression rings (25), preferably a wall region (25.2) of a space (25.1) between two protrusions on the outer circumference of the compression rings (25), is formed in a rectilinear manner or in a manner curved inward with respect to the respective rotation axis (D) in cross section.

14. The apparatus as claimed in one of the preceding claims, **characterized in that** the compression rings (25) of at least one press drum (10.1, 10.2) are provided on their outer circumference with an undulating profile, in particular a sawtooth profile.

15. The apparatus as claimed in one of the preceding claims, **characterized in that** a spike that points radially outward is arranged in a depression or gap in the compression rings (25), said depression or gap being located between two highest points of adjacent protrusions.

16. The apparatus as claimed in one of the preceding claims, **characterized in that** the outwardly projecting protrusions on the outer circumference of the compression rings (25) are configured as teeth (29), wherein the teeth (29) preferably have tooth tips (31) at their highest points and a space (25.1), or a recessed wall region (25.2), forming a tooth gap is formed in particular between in each case two adjacent teeth.

17. The apparatus as claimed in one of the preceding claims, **characterized in that** outer circumferential edges of annular walls (42, 43) that form opposite sides of each compression ring (25) are configured as cutting edges, wherein preferably each cutting edge of each particular compression ring (25) has a profiled shape in the circumferential direction on account of the protrusions or teeth (29) that follow one another in the circumferential direction and the intermediate depressions or spaces (25.1) and/or, at least on passing through (Vo) the connecting plane (VE), containing the two rotation axes (D), of the press drums (10.1, 10.2), the cutting edges of all the compression rings (25) of the one press drum (10.1, 10.2) overlap the cutting edges of the other press drum (10.1, 10.2), and in this case preferably the cutting edges of the compression rings (25) of the one press drum (10.1, 10.2) engage in the receiving grooves (24), corresponding to these compression rings (25), of the other press drum (10.1, 10.2).

18. The apparatus as claimed in one of the preceding claims, **characterized in that** the feeding device (15) comprises a drivable conveyor belt (16) which conveys the material to be pressed, in particular plant material or stalk material to be compacted, into the region of a feed hopper (17) between the press drums (10.1, 10.2), and which wraps around one of the two press drums (10.1, 10.2) regionally over an angle of at least 20° in order to form a precompaction region (19), wherein the precompaction region (19) has a constant width along its length, said width corresponding at least to the working width of the press drums (10.1, 10.2), and preferably the distance of the conveyor belt (16) from the press drum (10.1, 10.2) decreases in particular continuously in the conveying direction.

19. The apparatus as claimed in claim 18, **characterized in that** the conveyor belt (16) wraps around at least one press drum (10.1, 10.2) over an angular range of 30° to 120°.

20. The apparatus as claimed in claim 18 or 19, **characterized in that** the conveyor belt (16) is configured in an endless manner and is guided on a number of rollers (18), wherein at least one of the rollers (18) is drivable and/or at least one of the rollers (18) is adjustable with respect to the distance from the press drum (10.1, 10.2), and preferably a number of rollers (18) or all the rollers (18) are adjustable together and uniformly with respect to the distance from the press drum (10.1, 10.2).

21. The apparatus as claimed in one of the claims 18 to 20, **characterized in that** a feed screw (14) having a rotation axis oriented parallel to the ground (B) and transversely to the direction of travel (F) is arranged upstream of the feeding device (15).

22. The apparatus as claimed in one of the claims 18 to 21, **characterized in that** the conveyor belt (16) of the feeding device (15) is oriented, in the direction of its width, parallel to the rotation axes (D) of the press drums (10.1, 10.2), and/or an end, located at the front in the feeding direction, of the feeding device (15) extends beyond the furthest forward point, as seen in the feeding direction, of the front press drum (10.1, 10.2) in the direction of the pick-up apparatus (12).

## Revendications

1. Dispositif pour compacter des produits végétaux fibreux, en particulier pour compacter des produits de paille, avec un dispositif de chargement (15) pour amener les produits végétaux ou de paille à compacter, avec au moins une paire de tambours de presse (10.1, 10.2) déplaçables en mouvements de rotation de sens opposés, dans lequel un tambour de presse (10.1, 10.2) présente sur sa périphérie le long de son extension longitudinale axiale des rainures de réception (24) et un autre tambour de presse (10.1, 10.2) présente le long de son extension longitudinale axiale des anneaux de pression (25), avec une cavité intérieure (21) dans au moins un tambour de presse (10.1, 10.2), qui est reliée aux rainures de réception (24) par une multiplicité de canaux de presse (27) orientés radialement répartis sur la périphérie, et chacun des tambours de presse (10.1, 10.2) présente sur sa périphérie des rainures de réception (24) et des anneaux de pression (25) disposés l'un à côté de l'autre en alternance le long de leur extension longitudinale axiale, dans lequel les anneaux de pression (25) d'un tambour de presse respectif (10.1, 10.2) s'engagent dans les rainures de réception (24) de l'autre tambour de presse (10.1, 10.2) pendant le mouvement de rotation en sens opposés des tambours de presse (10.1, 10.2), dans lequel il est prévu sur les anneaux de pression (25) un profil périphérique présentant des saillies extérieures, le profil est prévu sur la périphérie extérieure des anneaux de pression (25), les tambours de presse (10.1, 10.2) présentent dans les rainures de réception (24) des nervures de paroi (32) orientées transversalement à leur direction de rotation (UR), qui sont disposées entre des canaux de presse voisins (27), **caractérisé en ce que** le profil présente entre chaque fois deux saillies voisines un creux ou un espace (25.1) et **en ce qu'**un point le plus élevé chaque fois d'une saillie des anneaux de pression (25) saillante radialement vers l'extérieur est chaque fois opposé à un point le plus élevé d'une nervure de paroi (32) des rainures de réception (24) lors de la traversée du plan de jonction (VE) entre les tambours de presse (10.1, 10.2) contenant les deux axes de rotation (D) des tambours de presse (10.1, 10.2) ou une saillie radialement extérieure des anneaux de pression (25) est située avec son point le plus élevé entre des nervures de paroi voisines (32) des rainures de réception (24) lors de la traversée du plan de jonction (VE) contenant les deux axes de rotation (D) des tambours de presse (10.1, 10.2) et la saillie respective des anneaux de pression (25) plonge en l'occurrence de préférence au moins partiellement dans l'espace (25.1) entre des nervures de paroi voisines (32).

2. Dispositif selon la revendication 1 **caractérisé en ce qu'**un contour extérieur (30) des saillies, considéré dans la direction des axes de rotation (D) des tambours de presse (10.1, 10.2), est adapté au contour des rainures de réception (24), de préférence les contours des tambours de presse opposés l'un à l'autre (10.1, 10.2) forment dans le plan des axes de rotation (D) une ligne de contour profilée, de préférence ondulée, et/ou les contours des tambours de presse opposés l'un à l'autre (10.1, 10.2) forment dans le plan des axes de rotation (D) une ligne de contour commune.

3. Dispositif selon la revendication 1 ou 2, **caractérisé en ce que** les deux tambours de presse (10.1, 10.2) peuvent être mis en mouvement de rotation synchrone de sens opposés et/ou les deux tambours de presse (10.1, 10.2) sont réalisés de façon identique et présentent de préférence aussi des dimensions identiques et/ou les largeurs des rainures de réception (24) correspondent, de préférence sont égales aux largeurs des anneaux de pression (25).

4. Dispositif selon l'une quelconque des revendications précédentes, **caractérisé en ce que** chaque fois deux saillies voisines espacées limitent un creux situé entre elles ou un espace situé entre elles (25.1).

5. Dispositif selon l'une quelconque des revendications précédentes, **caractérisé en ce qu'**aussi bien les anneaux de pression (25) et de préférence aussi les rainures de réception (24) des deux tambours de presse (10.1, 10.2) sont limité(e)s par des parois annulaires latérales opposées (42, 43), dans lequel les parois annulaires (42, 43) sont situées dans des plans coupant perpendiculairement ou à angle droit l'axe de rotation respectif (D) des tambours de presse (10.1, 10.2) et les plans de toutes les parois annulaires (42, 43) sont parallèles l'un à l'autre, dans lequel les distances entre des parois annulaires (42, 43) respectivement opposées des anneaux de pression (25) d'un premier tambour de presse (10.1, 10.2) correspondent de préférence aux distances entre des parois annulaires respectivement opposées (42, 43) des anneaux de pression (25) de l'autre tambour de presse (10.1, 10.2).

6. Dispositif selon l'une quelconque des revendications précédentes, **caractérisé en ce que** les canaux de presse (27) présentent un fond de rainure (28) prévu radialement à l'extérieur, dans lequel chaque canal de presse (27) relie son fond de rainure (28) à la cavité intérieure (21), et dans lequel de préférence chaque fond de rainure (28) est limité par des parois des nervures de paroi (32) orientées transversalement à la direction de rotation (UR) des tambours de presse (10.1, 10.2).

7. Dispositif selon l'une quelconque des revendications précédentes, **caractérisé en ce que** les extrémités supérieures (32.1) des nervures de paroi (32) orientées transversalement à la direction de rotation (UR) des tambours de presse (10.1, 10.2) sont réalisées en forme de protubérances ou de dents (32.1) avec des pointes de dent (32.2) saillantes radialement vers l'extérieur, dans lequel les protubérances ou les dents (32.1) ou leurs pointes de dent (32.2) limitent de préférence le fond de rainure (28) radialement vers l'extérieur.

8. Dispositif selon la revendication 6 ou 7, **caractérisé en ce que** le canal de presse (27) présente sur le côté tourné vers le fond de rainure (28) une zone d'introduction en forme de trémie (33).

9. Dispositif selon l'une quelconque des revendications précédentes, **caractérisé en ce que** tous les anneaux de pression (25) de chaque tambour de presse (10.1, 10.2) s'engagent pendant le mouvement de rotation en sens opposés des tambours de presse (10.1, 10.2) lors de la traversée (Vo) du plan de jonction (VE) contenant les deux axes de rotation (D) des rouleaux de presse (10.1, 10.2) dans les rainures de réception (24) de l'autre rouleau de presse (10.1, 10.2) associées à ces anneaux de pression (25), au moins jusqu'à proximité de l'extrémité supérieure ou des pointes de dent (32.2) de la nervure de paroi respective (32) orientée transversalement à la direction de rotation (UR) des tambours de presse (10.1, 10.2) de la rainure de réception associée (24) de l'autre tambour de presse (10.1, 10.2).

10. Dispositif selon l'une quelconque des revendications précédentes, **caractérisé en ce que** chaque anneau de pression (25) d'un premier tambour de presse (10.1, 10.2) est limité sur les deux côtés avec une zone de recouvrement (A) lors de la traversée (Vo) du plan de jonction (VE) des tambours de presse (10.1, 10.2) contenant les deux axes de rotation (D), dans la rainure de réception (24) de l'autre tambour de presse (10.1, 10.2), par les anneaux de pression (25) voisins de cette rainure de réception (24) de l'autre tambour de presse (10.1, 10.2) et/ou la zone de recouvrement (A) correspond à la zone de recouvrement entre le diamètre extérieur de l'anneau de pression (25) du premier tambour de presse (10.1, 10.2) et le diamètre extérieur de l'anneau de pression (25) de l'autre tambour de presse (10.1, 10.2) lors de la traversée (Vo) du plan de jonction (VE).

11. Dispositif selon l'une quelconque des revendications précédentes, **caractérisé en ce que** les anneaux de pression (25) des tambours de presse (10.1, 10.2) s'engagent alternativement dans les rainures de réception (24) des tambours de presse (10.1, 10.2) avec une zone de recouvrement (A) telle qu'au moins lors de la traversée (Vo) du plan de jonction (VE) contenant les deux axes de rotation (D) des tambours de presse (10.1, 10.2) il existe toujours un chevauchement ou un recouvrement des parois annulaires (42, 43) limitant sur les deux côtés les anneaux de pression (25) d'un tambour de presse (10.1, 10.2) avec les parois annulaires (42, 43) limitant sur les deux côtés les anneaux de pression (25) de l'autre tambour de presse (10.1, 10.2).

12. Dispositif selon l'une quelconque des revendications précédentes, **caractérisé en ce que** les points les plus élevés des saillies des anneaux de pression (25) et des nervures de paroi (32) des rainures de réception (24) forment chaque fois par paires une sorte de dispositif de fermeture, du fait que les points les plus élevés des saillies des anneaux de pression (25) et les points les plus élevés ou les pointes de dent (32.2) des nervures de paroi (32) sont orientés l'un vers l'autre lors de la traversée du plan de jonction (VE) et présentent au maximum une faible distance l'un de l'autre.

13. Dispositif selon l'une quelconque des revendications précédentes, **caractérisé en ce que** le creux respectif des anneaux de pression (25), de préférence une région de paroi (25.2) d'un espace (25.1) entre deux saillies à la périphérie extérieure des anneaux de pression (25), est réalisé en section transversale sous forme droite ou sous forme bombée vers l'intérieur par rapport à l'axe de rotation respectif (D).

14. Dispositif selon l'une quelconque des revendications précédentes, **caractérisé en ce que** les anneaux de pression (25) d'au moins un tambour de presse (10.1, 10.2) sont dotés sur leur périphérie extérieure d'un profilage ondulé, en particulier d'un profilage en dents de scie.

15. Dispositif selon l'une quelconque des revendications précédentes, **caractérisé en ce qu'**une épine orientée radialement vers l'extérieur est disposée dans un creux ou un intervalle des anneaux de pression (25) se trouvant entre deux points les plus élevés de saillies voisines.

16. Dispositif selon l'une quelconque des revendications précédentes, **caractérisé en ce que** les saillies faisant saillie vers l'extérieur à la périphérie extérieure des anneaux de pression (25) sont réalisées en forme de dents (29), dans lequel les dents (29) présentent de préférence des pointes de dent (31) à leurs points les plus élevés et en particulier un espace (25.1) formant un entredent ou une région de paroi approfondie (25.2) est formé(e) entre chaque fois deux dents voisines.

17. Dispositif selon l'une quelconque des revendications précédentes, **caractérisé en ce que** les arêtes périphériques extérieures des parois annulaires (42, 43) formant les côtés opposés de chaque anneau de pression (25) sont réalisées en forme d'arêtes de coupe, dans lequel de préférence chaque arête de coupe de l'anneau de pression respectif (25) présente en direction périphérique un tracé profilé par les saillies ou les dents (29) et les creux ou les espaces (25.1) situés entre celles-ci qui se succèdent en direction périphérique et/ou les arêtes de coupe de tous les anneaux de pression (25) d'un premier tambour de presse (10.1, 10.2) recouvrent les arêtes de coupe de l'autre tambour de presse (10.1, 10.2) au moins lors de la traversée (Vo) du plan de jonction (VE) des tambours de presse (10.1, 10.2) contenant les deux axes de rotation (D) et les arêtes de coupe des anneaux de pression (25) du premier tambour de presse (10.1, 10.2) s'engagent en l'occurrence de préférence dans les rainures de réception (24) de l'autre tambour de presse (10.1, 10.2) correspondant à ces anneaux de pression (25).

18. Dispositif selon l'une quelconque des revendications précédentes, **caractérisé en ce que** le dispositif de chargement (15) comprend une bande transporteuse pouvant être entraînée (16), qui transporte le produit à comprimer, en particulier les produits végétaux ou les produits de paille à compacter, dans la région d'une trémie d'entrée (17) entre les tambours de presse (10.1, 10.2) et qui entoure un des deux tambours de presse (10.1, 10.2) pour la formation d'une région de pré-compression (19) localement sur un angle d'au moins 20°, dans lequel la région de pré-compression (19) présente sur sa longueur une largeur constante, qui correspond au moins à la largeur de travail des tambours de presse (10.1, 10.2) et de préférence la distance entre la bande transporteuse (16) et le tambour de presse (10.1, 10.2) diminue, en particulier en continu, dans la direction de transport.

19. Dispositif selon la revendication 18, **caractérisé en ce que** la bande transporteuse (16) entoure au moins un tambour de presse (10.1, 10.2) sur une plage angulaire de 30° à 120°.

20. Dispositif selon la revendication 18 ou 19, **caractérisé en ce que** la bande transporteuse (16) est une bande sans fin et est guidée sur plusieurs rouleaux (18), dans lequel au moins un des rouleaux (18) peut être entraîné et/ou au moins un des rouleaux (18) est réglable par rapport à la distance au tambour de presse (10.1, 10.2), de préférence plusieurs rouleaux (18) ou tous les rouleaux (18) sont réglables ensemble et simultanément par rapport à la distance au tambour de presse (10.1, 10.2).

21. Dispositif selon l'une quelconque des revendications 18 à 20, **caractérisé en ce qu'**une vis d'alimentation (14) avec un axe de rotation orienté parallèlement au sol (B) et transversalement à la direction de marche (F) est disposée avant le dispositif de chargement (15).

22. Dispositif selon l'une quelconque des revendications 18 à 21, **caractérisé en ce que** la bande transporteuse (16) du dispositif de chargement (15) est orientée dans la direction de sa largeur parallèlement aux axes de rotation (D) des tambours de presse (10.1, 10.2) et/ou une extrémité avant du dispositif de chargement (15) dans la direction de chargement s'étend, dans la direction du dispositif d'amenée (12), par-dessus le point le plus avancé du tambour de presse avant (10.1, 10.2), considéré dans la direction de chargement.
